# EUROPÄISCHE PATENTSCHRIFT

(11) **EP 1 926 621 B1**
(45) Veröffentlichungstag und Bekanntmachung des Hinweises auf die Patenterteilung: **15.06.2016**
(21) Anmeldenummer: 06793020.6
(22) Anmeldetag: 25.08.2006
(51) Int. Cl.: B60K 6/26, B60K 1/02, B60K 6/365, B60K 6/405, B60K 6/445, B60K 6/48, F16H 37/08

(54) **ANTRIEBSSYSTEM FÜR EIN LANDWIRTSCHAFTLICHES ODER INDUSTRIELLES NUTZFAHRZEUG UND VERFAHREN ZUM BETREIBEN EINES ANTRIEBSSYSTEMS**
DRIVE SYSTEM FOR AN AGRICULTURAL OR INDUSTRIAL UTILITY VEHICLE AND METHOD FOR OPERATING A DRIVE SYSTEM
SYSTEME D'ENTRAINEMENT POUR UN VEHICULE UTILITAIRE INDUSTRIEL OU AGRICOLE ET PROCEDE POUR FAIRE FONCTIONNER UN SYSTEME D'ENTRAINEMENT

(30) Priorität: 15.09.2005 DE 102005044180
(43) Veröffentlichungstag der Anmeldung: 04.06.2008
(73) Patentinhaber: Deere & Company, Moline, IL 61265 (US)
(72) Erfinder: TARASINSKI, Nicolai, 67227 Frankenthal (DE); GUGEL, Rainer, 68163 Mannheim (DE)
(74) Vertreter: Holst, Sönke
(86) Internationale Anmeldenummer: PCT/EP2006/065689
(87) Internationale Veröffentlichungsnummer: WO 2007/031397

(56) Entgegenhaltungen:
- EP-A1- 0 812 720
- EP-A2- 1 063 152
- EP-A2- 1 232 892
- EP-A2- 1 466 773
- WO-A-2005/090108

## Beschreibung

Die Erfindung betrifft ein Antriebssystem für ein landwirtschaftliches oder industrielles Nutzfahrzeug, vorzugsweise für einen Traktor. Das Antriebssystem umfasst eine ein mechanisches Drehmoment erzeugende Antriebsbaugruppe, eine erste und eine zweite elektrische Maschine, eine zum Antreiben mindestens einer Fahrzeugachse dienende erste mechanische Ausgangsschnittstelle und eine zweite mechanische Ausgangsschnittstelle. Eine elektrische Maschine weist einen Rotor auf, welcher drehfest mit einer Welle verbunden ist. Eine von der Antriebsbaugruppe angetriebene Welle steht mit der Welle der ersten elektrischen Maschine in Drehverbindung. Mit der zweiten Ausgangsschnittstelle ist ein an das Nutzfahrzeug ankoppelbares Arbeitsgerät mechanisch betreibbar. Die Welle der zweiten elektrischen Maschine ist reversibel mit der ersten mechanischen Ausgangsschnittstelle verbindbar. Des Weiteren betrifft die vorliegende Erfindung ein landwirtschaftliches oder industrielles Nutzfahrzeug, insbesondere ein Traktor mit einem solchen Antriebssystem sowie ein Verfahren zum Betreiben eines solchen Antriebssystems.

Das Dokument D1 (EP 0 812 720) wird als nächstliegender Stand der Technik angesehen und offenbart die Merkmale der Präambel des unabhängigen Anspruchs 1.

Unter einer Antriebsbaugruppe im Sinn der vorliegenden Erfindung ist insbesondere ein Motor, ein Verbrennungsmotor, ein Dieselmotor oder eine Brennstoffzelle zu verstehen.

Zum Antreiben von Fahrzeugen werden in zunehmendem Maße Elektromotoren verwendet, die ihre Energie beispielsweise aus verbrennungsmotorgetriebenen Generatoren, Batterien oder Brennstoffzellen beziehen. Zum Erzielen einer höheren Spreizung werden den Elektromotoren in manchen Fällen schaltbare Getriebestufen nachgeordnet, meist erfolgt die Leistungsübertragung aber ohne Schaltstufen. Unter dem Begriff der Spreizung versteht man den Geschwindigkeitsbereich, über den die Nennleistung am Abtrieb erreichbar ist.

Bei Straßen- und Schienenfahrzeugen reicht die bislang im Stand der Technik beschriebene Vorgehensweise zum Erzielen der gewünschten Fahrleistung in der Regel aus. Die Spreizung liegt hier in der Größenordnung von 5 bis 10. Die kleinste Geschwindigkeit, bei der die Nennleistung erreicht wird, liegt häufig über 20km/h. Bei landwirtschaftlichen Nutzfahrzeugen und insbesondere bei Traktoren reicht diese Spreizung nicht aus. Es sind Werte von über 15 erforderlich, um die Antriebsaufgaben eines Traktors abzudecken. Die kleinste Geschwindigkeit, bei der die Nennleistung erreicht wird, liegt in der Nähe von 3 km/h. Wegen der kleinen Absolutgeschwindigkeit und hohen Zugkraft von Traktoren sind Schaltvorgänge, mit denen in einen anderen Geschwindigkeitsbereich bei ähnlicher Zugkraft geschaltet werden muss, aufgrund des im Antriebssystem vorliegenden Übersetzungssprungs sehr unkomfortabel und bewirkt einen Schaltruck.

Zudem sind Traktoren in Gegensatz zu Straßen- und Schienenfahrzeugen in der Regel zusätzlich zum Fahrantrieb mit einem oder mehreren weiteren mechanischen Abtrieben für Anbaugeräte, einer so genannten Zapfwelle (PTO = power take off), ausgestattet, wobei ein solcher mechanischer Abtrieb gemäß der vorliegenden Erfindung mit der zweiten mechanischen Ausgangsschnittstelle bezeichnet wird.

Üblicherweise wird die mit der Antriebsbaugruppe in Drehmomentfluss stehende erste elektrische Maschine als Generator und die zweite elektrische Maschine - insbesondere wenn sie mit der ersten mechanischen Ausgangsschnittstelle im Drehmomentfluss steht - als Motor betrieben, so dass das Nutzfahrzeug durch die zweite elektrische Maschine fortbewegt wird. Falls in einem solchen Betriebszustand die Fahrgeschwindigkeit sich wesentlich verändert und daher die zweite elektrische Maschine anders elektrisch zu beschalten ist, wäre eine solche Beschaltungsänderung der zweiten elektrischen Maschine unter Umständen mit einer Drehmomentunterbrechung verbunden. Dies ist allerdings insbesondere bei Traktoren zu vermeiden, da eine Beschaltungsänderung unter Last erfolgen muss (Lastschaltvorgang), sonst würde ein Traktor beim Pflügen und einem lastlosen Schaltvorgang unmittelbar stehen bleiben.

Bei einer Beschaltungsänderung könnten auch Drehmomentungleichförmigkeiten auftreten, welche sich negativ auf den Fahrkomfort auswirken.

Der vorliegenden Erfindung liegt daher die Aufgabe zugrunde, ein Antriebssystem, ein landwirtschaftliches oder industrielles Nutzfahrzeug und ein Verfahren zum Betreiben eines Antriebssystems der eingangs genannten Art anzugeben und weiterzubilden, durch welches die vorgenannten Probleme überwunden werden. Insbesondere soll eine Beschaltungsänderung der zweiten elektrischen Maschine möglich sein, ohne dass es zu Drehmomentunterbrechungen oder größeren Drehmomentungleichförmigkeiten kommt.

Die Aufgabe wird erfindungsgemäß durch die Lehre des Patentanspruchs 1 gelöst. Weitere vorteilhafte Ausgestaltungen und Weiterbildungen der Erfindung gehen aus den Unteransprüchen hervor.

Erfindungsgemäß ist ein Antriebssystem der eingangs genannten Art dadurch gekennzeichnet, dass eine dritte elektrische Maschine vorgesehen ist, deren Welle reversibel mit der ersten mechanischen Ausgangsschnittstelle verbindbar ist, und dass die Wellen der zweiten und dritten elektrischen Maschine synchron miteinander koppelbar sind.

Erfindungsgemäß ist zunächst erkannt worden, dass Änderungen des Betriebszustands einer einzigen zum Antrieb des Fahrzeugs vorgesehenen elektrischen Maschinen in der Regel nur mit einer Drehmomentunterbrechung oder zumindest eine Drehmomentungleichförmigkeit möglich ist. Falls allerdings für diese eine zum Antrieb des Fahrzeugs dienende elektrische Maschine zwei elektrische Maschinen eingesetzt werden, kann zum Umschalten eines Betriebszustands einer elektrischen Maschine oder zum Umschalten der Betriebszustände beider elektrischen Maschinen eine Drehmomentunterbrechung und eine Drehmomentungleichförmigkeit zumindest weitgehend vermieden werden, indem die zwei zum Antrieb des Fahrzeugs dienenden elektrischen Maschinen synchron miteinander gekoppelt sind. Hierdurch kann nämlich beispielsweise eine elektrische Maschine in einen lastlosen Zustand verbracht werden während die andere elektrische Maschine in dieser Zeit für einen drehmomentunterbrechungsfreien Antrieb des Fahrzeugs sorgt. Gegebenenfalls kann diese elektrische Maschine sogar kurzzeitig überlastet werden, damit keine Leistungseinbußen während des Umschaltvorgangs eintreten. Sobald der Umschaltvorgang der einen elektrischen Maschine vollzogen ist, kann diese wieder ein Drehmoment aufbauen und dieses beispielsweise auf die erste mechanische Ausgangsschnittstelle übertragen.

Die erste mechanische Ausgangsschnittstelle dient zum Antreiben mindestens einer Fahrzeugachse. Falls das landwirtschaftliche oder industrielle Nutzfahrzeug in Form eines Traktors ausgebildet ist, dient die erste mechanische Ausgangsschnittstelle ganz besonders bevorzugt zum Antreiben der Räder der Hinterachse des Traktors. Optional kann die erste mechanische Ausgangsschnittstelle zusätzlich zum Antrieb der Räder der Vorderachse des Traktors dienen, welche zum Beispiel mittels einer Kupplung zugeschaltet werden kann. Obwohl die zweite mechanische Ausgangsschnittstelle zum mechanischen Antreiben eines Arbeitsgeräts dient, welches an das Nutzfahrzeug ankoppelbar ist, könnte die zweite mechanische Ausgangsschnittstelle zusätzlich oder alternativ zum Antrieb eines am Nutzfahrzeug selbst vorgesehenen weiteren mechanischen Verbrauchers dienen, beispielsweise zum Antreiben eines Dreschwerks eines Mähdreschers.

Nun könnte grundsätzlich vorgesehen sein, dass eine erfindungsgemäße Kopplung der zweiten und dritten elektrischen Maschine lediglich zeitweise vorgesehen ist und eine solche Kopplung beispielsweise mit Hilfe einer extra hierfür vorgesehenen Getriebeschaltstelle realisierbar ist. In einer ganz besonders bevorzugten Ausführungsform sind allerdings die Wellen der zweiten und dritten elektrischen Maschine stets miteinander synchron gekoppelt. Dies könnte beispielsweise über ein Zahnrad oder ein Stirnrad erfolgen, welches mit entsprechenden Zahnrädern bzw. Stirnrädern kämmt, die drehfest mit den jeweiligen Wellen der beiden elektrischen Maschinen verbunden sind. Das Zahnrad oder Stirnrad könnte derart im Antriebssystem angeordnet sein, dass es mit der ersten Ausgangsschnittstelle drehfest in Verbindung verbringbar ist. Im Konkreten ist hierzu eine Getriebeschaltstelle vorgesehen, mit welcher eine drehfeste Verbindung zwischen dem Zahnrad (und somit den Rotoren der zwei elektrischen Maschinen) und der ersten mechanischen Ausgangsschnittstelle herstellbar ist.

In den meisten Betriebszuständen des Antriebssystems ist es vorgesehen, dass zumindest eine der elektrischen Maschinen als Generator betrieben wird und dass mit der von einer elektrischen Maschine erzeugten elektrischen Energie mindestens eine der beiden anderen elektrischen Maschinen angetrieben wird.

Eine als Motor oder als Generator betriebene elektrische Maschine weist bevorzugt eine Synchronmaschine oder eine Asynchronmaschine auf beziehungsweise könnte nach dem Prinzip einer Synchronmaschine bzw. Asynchronmaschine arbeiten. So könnte für jede elektrische Maschine ein Wechselrichter bzw. Umrichter vorgesehen sein. Da elektrischer Strom mit Hilfe einer als Generator betriebenen elektrischen Maschine erzeugt wird, welche von der Antriebsbaugruppe angetrieben wird und die Antriebsbaugruppe in Abhängigkeit der jeweiligen Fahrsituation des Nutzfahrzeugs eine variable Drehzahl aufweist, weist der von der als Generator betriebenen elektrischen Maschine erzeugte elektrische Wechselstrom eine variable bzw. hiervon abhängige Frequenz auf. Zur Umwandlung des elektrischen Wechselstroms variabler Frequenz in elektrischen Wechselstrom einer vorgegebenen, im Wesentlichen konstanten Frequenz könnte ein solcher Wechselrichter dienen. Mit dem Wechselrichter könnte der von der als Generators betriebenen elektrischen Maschine erzeugte elektrische Wechselstrom veränderbarer Frequenz zunächst in Gleichstrom und dann in Wechselstrom der vorgebbaren Frequenz umgewandelt werden. Mit diesem Wechselstrom können dann beispielsweise eine elektrische Maschine oder andere elektrische Komponenten angetrieben werden. Bevorzugt ist ein Gleichstromkreis mit mindestens einem elektrischen Speicher vorgesehen. Dieser Gleichstromkreis wird von dem Wechselrichter gespeist und könnte sozusagen als Zwischenstromkreis dienen, an welchen auch unmittelbar mit Gleichstrom betreibbare elektrische Verbraucher angeschlossen werden können. Der elektrische Speicher könnte beispielsweise in Form einer Batterie oder entsprechend dimensionierter Kondensatoren ausgeführt sein. Ebenfalls ganz besonders bevorzugt ist mindestens ein weiterer Wechselrichter vorgesehen, mit welchem der Gleichstrom in einen Wechselstrom einer vorgebbaren Frequenz oder in Wechselstrom eines vorgebbaren Verlaufs variabler Frequenzen umwandelbar ist. Hiermit kann beispielsweise mindestens eine elektrische Maschine oder elektrischer Verbraucher betrieben werden, welcher mit Wechselstrom angetrieben wird.

In einer ganz besonders bevorzugten Ausführungsform sind die elektrischen Maschinen im Wesentlichen baugleich ausgebildet und/oder weisen eine im Wesentlichen vergleichbare Leistungscharakteristik auf. Damit kann für landwirtschaftliche Nutzfahrzeuge und insbesondere für Traktoren eine günstige Konfiguration des erfindungsgemäßen Antriebssystems erreicht werden, wobei beispielsweise eine relativ einfach strukturierte Ansteuerung der zweiten oder dritten elektrischen Maschine ein Umschalten zwischen unterschiedlichen Betriebsmodi schaltruckfrei möglich ist, da die Leistungscharakteristiken der zweiten und dritten elektrischen Maschine im Wesentlichen identisch sind und Treiberstufen bzw. Leistungselektronikbaugruppen im Wesentlichen identisch ausgebildet sein können.

Gemäß einer bevorzugten Ausführungsform ist eine Schalteinrichtung vorgesehen, mit welcher mindestens zwei als Motor betriebene elektrische Maschinen elektrisch parallel zueinander oder elektrisch in Reihe zueinander verschaltbar sind. Die zwei elektrischen Maschinen werden in einem Betriebszustand mit niedrigen Fahrgeschwindigkeiten und hohen Zugleistungen üblicherweise elektrisch in Reihe zueinander verschaltet sein und mit relativ niedrigen Drehzahlen unter Abgabe eines relativ hohen Drehmoments betrieben werden. In einem solchen Betriebszustand fließen relativ hohe Ströme und es liegen relativ kleine Spannungen an. Falls das Nutzfahrzeug in eine Betriebszustand mit höheren Fahrgeschwindigkeiten umgeschaltet werden soll, könnte mit der Schalteinrichtung die zwei als Motor betriebene elektrische Maschinen elektrisch parallel zueinander geschaltet werden, so dass eine größere Drehzahl bei einer kleineren Drehmomentabgabe möglich ist. In einem solchen Betriebszustand fließen je Maschine relativ kleine Ströme und es liegen relativ hohe Spannungen an. Durch eine geeignete Umschaltung zwischen einer Parallel- zu einer Reihenschaltung der elektrischen Maschinen können in ganz besonders vorteilhafter Weise ein zu großer Feldschwächebereich beim Betrieb einer oder mehrerer elektrischer Maschinen vermieden werden.

Wenn zwei als Motor betriebene elektrische Maschinen vorgesehen sind, sind zum Verändern des Lastzustands mindestens einer elektrischen Maschine, insbesondere der zweiten und der dritten elektrischen Maschine, zwei elektrische Maschinen von einer elektrischen Reihenschaltung in eine elektrische Parallelschaltung oder von einer elektrischen Parallelschaltung in eine elektrische Reihenschaltung umschaltbar.

Ganz besonders bevorzugt sind in Abhängigkeit des jeweiligen Betriebszustands des Antriebssystems bzw. des Nutzfahrzeugs die Wicklungen einer als Motor betriebenen elektrischen Maschine intern elektrisch parallel, in Reihe, im Stern oder im Dreieck verschaltbar. Entsprechende Umschaltungselemente sind aus dem Stand der Technik bekannt und werden beispielsweise von der Firma Moeller Electric AG, Im Langhag 14, CH-8307 Effretikon, angeboten. Falls die Wicklungen einer als Motor betriebenen elektrischen Maschine intern von einer Stern- in eine Dreieck-Schaltung umgeschaltet werden soll, kann eine andere als Motor betriebene elektrische Maschine - während einer synchronen Kopplung der zwei elektrischen Maschinen - für einen drehmomentfreien Antrieb des Fahrzeugs sorgen.

Gemäß einer ganz besonders bevorzugten Ausführungsform wird zur Beschaltungsänderung einer als Motor betriebenen elektrischen Maschine eine zu dieser elektrischen Maschine synchron gekoppelte weitere elektrische Maschine zunächst derart angesteuert, dass mit der weiteren elektrischen Maschine einen drehmomentunterbrechungsfreien Betrieb bei einem lastlosen Zustand der umzuschaltenden elektrischen Maschine möglich ist. Die Beschaltung der umzuschaltenden elektrischen Maschine ist in dem Lastzustand der weiteren elektrischen Maschine änderbar. Hierzu könnte eine entsprechend ausgebildete Ansteuersoftware in der die elektrischen Maschinen ansteuernden Steuer- und/oder Schalteinrichtung einen weichen Umschaltvorgang gewährleisten.

In einer bevorzugten Weiterbildung sind mindestens zwei als Motor betriebene elektrische Maschinen derart ansteuerbar, dass eventuell vorliegende Drehmomentungleichförmigkeiten einer einzelnen elektrischen Maschine von einer anderen elektrischen Maschine auf Grund der synchronen Kopplung zumindest weitgehend ausgleichbar ist. Dies ist insbesondere für einen Betriebszustand des Antriebssystems vorgesehen, in welchem die mindestens zwei als Motor betriebenen elektrischen Maschinen mit der ersten und/oder zweiten mechanischen Ausgangsschnittstelle gekoppelt sind. Zu einem weitgehenden Ausgleich der Drehmomentungleichförmigkeiten müssen die Ungleichförmigkeiten allerdings in bestimmter Weise verteilt sein, beispielsweise könnte die Verteilung statistischer Natur sein oder die auftretenden Drehmomentungleichförmigkeiten sind zueinander phasenverschoben.

Bevorzugt wird eine elektrische Maschine zumindest größtenteils derart betrieben, dass ein vorgebbarer Feldschwächebereich einer elektrischen Maschine nicht überschritten wird. Falls das Antriebssystem für einen Traktor vorgesehen ist, werden die zum Antrieb des Traktors vorgesehenen elektrischen Maschinen nahezu immer im Feldschwächebereich betrieben, da hierbei die Drehzahl der elektrischen Maschine bei einer maximal abgegebenen Leistung verändert werden kann. Es wird beispielsweise mit einer entsprechenden Steuer- bzw. Regeleinheit überwacht, dass eine vorgebbare Feldschwäche einer elektrischen Maschine nicht überschritten wird, da ansonsten der Drehmomentfluss zwischen einer elektrischen Maschine und der ersten mechanischen Ausgangsschnittstelle unterbrochen werden könnte.

Bevorzugt sind mindestens zwei der drei elektrischen Maschinen in und/oder an einer gemeinsamen Gehäuseanordnung angeordnet und/oder aufgenommen. Mit anderen Worten ermöglicht die Zusammenfassung mindestens zweier elektrischer Maschinen in einer gemeinsamen Gehäuseanordnung eine modulartige Bauweise dieser Antriebskomponenten.

Ganz besonders bevorzugt sind mindestens zwei der elektrischen Maschinen räumlich benachbart zueinander angeordnet. Zum Erzielen einer kompakten Bauweise könnten die elektrischen Maschinen unmittelbar angrenzend nebeneinander derart angeordnet sein, dass die Gehäuse der elektrischen Maschinen weitgehend aneinander angrenzen. Im Allgemeinen werden die elektrischen Maschinen gemeinsam in einer Gehäuseanordnung voneinander beabstandet angeordnet sein, wobei der jeweilige Abstand zwischen zwei elektrischen Maschinen von verschiedenen Faktoren abhängen kann, beispielsweise von dem zur Verfügung stehenden Bauraum in dem Nutzfahrzeug oder von den Erfordernissen bezüglich der Kühlung der elektrischen Maschinen.

In der zum Anmeldezeitpunkt der vorliegenden Patentanmeldung noch nicht veröffentlichten DE 10 2004 012 767 sind drei elektrische Maschinen räumlich derart hintereinander angeordnet, dass die Rotoren der elektrischen Maschinen zueinander koaxial angeordnet sind. Eine solche Anordnung (Hintereinanderanordnung) der elektrischen Maschinen ist grundsätzlich dann vorteilhaft, wenn in Längsrichtung der Rotoren der elektrischen Maschine - üblicherweise in Richtung der Fahrzeuglängsachse orientiert - genügend Bauraum bei dem Fahrzeug zur Verfügung steht. Dies ist bei landwirtschaftlichen und industriellen Nutzfahrzeugen und insbesondere bei Traktoren nicht immer der Fall. Daher sind in einer ganz besonders bevorzugten Ausführungsform mindestens zwei der elektrischen Maschinen räumlich derart angeordnet, dass deren Wellen im Wesentlichen parallel zueinander orientiert und zueinander versetzt angeordnet sind. Durch eine solche Anordnung der elektrischen Maschinen ist der erforderliche Bauraum in einer Richtung quer zur Fahrzeuglängsachse größer als es bei der Hintereinanderanordnung der elektrischen Maschinen der Fall ist. Dafür ist jedoch der Bauraum in Längsrichtung der Rotoren der elektrischen Maschinen bzw. in Fahrzeuglängsrichtung kleiner als bei einer Hintereinanderanordnung der elektrischen Maschinen, was insbesondere bei Traktoren von Vorteil ist.

In einer ganz besonders bevorzugten Ausführungsform ist eine vierte elektrische Maschine vorgesehen. Die vierte elektrische Maschine ist mit der ersten oder der zweiten mechanischen Ausgangsschnittstelle - insbesondere auch reversibel - koppelbar. Die vierte elektrische Maschine ist bevorzugt räumlich benachbart zu einer der ersten bis dritten elektrischen Maschine angeordnet. So könnte beispielsweise die vierte elektrische Maschine ebenfalls in der Gehäuseanordnung angeordnet sein, in welcher auch die erste, zweite und dritte elektrische Maschine angeordnet ist, so dass eine kompakte Anordnung und/oder eine gemeinsame Kühlung der vier elektrischen Maschinen möglich ist.

Zum Summieren des von der Antriebsbaugruppe erzeugten Drehmoments und des von einer elektrischen Maschine erzeugten Drehmoments könnte bevorzugt ein Summierungsgetriebe mit drei mechanischen Schnittstellen vorgesehen sein. Die erste Schnittstelle des Summierungsgetriebes könnte mit einer von der Antriebsbaugruppe angetriebenen Welle gekoppelt sein. Die zweite Schnittstelle des Summierungsgetriebes könnte mit der Welle einer elektrischen Maschine kuppelbar sein. Die dritte Schnittstelle des Summierungsgetriebes könnte mit der ersten mechanischen Ausgangsschnittstelle und/oder mit der zweiten mechanischen Ausgangsschnittstelle des Antriebssystems reversibel kuppelbar sein.

Im Konkreten könnte das Summierungsgetriebe ein Planetengetriebe aufweisen. Gemäß einer bevorzugten Ausführungsform steht die von der Antriebsbaugruppe angetriebene Welle mit dem Hohlrad des Planetengetriebes drehfest in Verbindung. Der Planetenträger des Planetengetriebes ist reversibel mit der ersten Ausgangsschnittstelle kuppelbar. Das Sonnenrad des Planetengetriebes ist reversibel mit der zweiten, dritten oder vierten elektrischen Maschine kuppelbar. Ein solches Summierungsgetriebe ermöglicht in ganz besonders vorteilhafter Weise sehr flexible Einsatzmöglichkeiten des Antriebssystems, insbesondere bei einem unabhängig von der ersten Ausgangsschnittstelle betreibbaren zweiten Ausgangsschnittstelle (Zapfwelle), worauf in der Figurenbeschreibung im Konkreten eingegangen wird. In diesem Zusammenhang könnte vorgesehen sein, dass die Welle der vierten elektrischen Maschine mit dem Sonnenrad des Planetengetriebes in Drehverbindung steht. So wie der Rotor der ersten elektrischen Maschine ständig mit einer von der Antriebsbaugruppe angetriebenen Welle in Drehverbindung stehen kann, könnte auch der Rotor der vierten elektrischen Maschine ständig mit dem Sonnenrad des Planetengetriebes in Drehverbindung stehen. Es könnte jedoch eine Getriebeschaltstelle vorgesehen sein, mit welcher die erste und/oder die vierte elektrische Maschine von der von der Antriebsbaugruppe angetriebenen Welle bzw. von dem Sonnenrad des Planetengetriebes abkuppelbar ist.

Die zweite Ausgangsschnittstelle kann in einer bevorzugten Weiterbildung dadurch angetrieben werden, dass der Planetenträger des Planetengetriebes mit der zweiten Ausgangsschnittstelle gekuppelt wird. Alternativ oder zusätzlich kann die zweite Ausgangsschnittstelle dadurch angetrieben werden, dass eine von der Antriebsbaugruppe angetriebene Welle reversibel mit der zweiten Ausgangsschnittstelle gekuppelt wird. Hierzu könnte jeweils eine reibschlüssige Kupplung bzw. eine Lamellenkupplung oder eine Klauenkupplung vorgesehen sein, wobei die Lamellenkupplung elektromagnetisch oder hydraulisch betätigbar ausgeführt sein könnte. Somit besteht grundsätzlich die Möglichkeit, die zweite Ausgangsschnittstelle lediglich mit einem Teil oder mit dem gesamten von der Antriebsbaugruppe erzeugten mechanischen Drehmoment anzutreiben, falls eine entsprechende Kupplung eingerückt ist. Weiterhin kann die zweite Ausgangsschnittstelle lediglich von dem am Planetenträger des Planetengetriebes anliegenden Drehmoments betrieben werden, falls eine entsprechende weitere Kupplung eingerückt ist. Es ist auch denkbar, dass die zweite Ausgangsschnittstelle sowohl von einem Teil des von der Antriebsbaugruppe erzeugten mechanischen Drehmoments und des am Planetenträger des Planetengetriebes anliegenden Drehmoments betrieben wird. In diesem Fall sind beide Kupplungen eingerückt und es werden die mechanischen Drehmomente entsprechend summiert. Dies setzt allerdings voraus, dass die Komponenten des Antriebssystems derart betrieben werden, dass es nicht zu einem Blockieren des Antriebssystems kommt.

Insbesondere wenn das erfindungsgemäße Antriebssystem für Traktoren eingesetzt wird, ist ein erster Betriebszustand vorgesehen, in welchem die erste elektrische Maschine als Generator betrieben wird und die zweite und die dritte elektrische Maschine als Motor betrieben werden und mit der ersten mechanischen Ausgangsschnittstelle verbunden sind. Das von der zweiten und dritten elektrischen Maschine erzeugte Drehmoment wird auf die erste mechanische Ausgangsschnittstelle übertragen. In diesem Betriebszustand erfolgt der Fahrantrieb des Traktors ausschließlich von den zwei elektrischen Maschinen. In diesem Betriebsmodus kann ein entsprechend ausgestatteter Traktor beispielsweise eine Geschwindigkeit von 0 bis zu 25 m/h für die Vorwärts- oder Rückwärtsfahrt haben. Hierbei ist es auch möglich, einen Zapfwellenbetrieb über die zweite mechanische Ausgangsschnittstelle - insbesondere auch stufenlos - zu realisieren, worauf im Folgenden eingegangen wird.

Weiterhin ist ein zweiter Betriebszustand vorgesehen, in welchem mit einem Teil des von der Antriebsbaugruppe erzeugten mechanischen Drehmoments die als Generator betriebene vierte elektrische Maschine antreibbar ist. Die zweite und dritte elektrische Maschine werden als Motor betrieben. Das von der zweiten und dritten elektrischen Maschinen erzeugte mechanische Drehmoment ist mit einem weiteren Teil des von der Antriebsbaugruppe erzeugten mechanischen Drehmoments auf die erste mechanische Ausgangsschnittstelle übertragbar. Dieser Betriebsmodus stellt eine leistungsverzweigte Getriebestruktur in einer "speed-split"-Konfiguration dar. Die von der Antriebsbaugruppe abgegebene Leistung verzweigt im Summierungsgetriebe und wird auf der ersten mechanischen Ausgangsschnittstelle wieder summiert. Somit wird ein Teil der Leistung mechanisch und ein anderer Teil der Leistung elektrisch übertragen. Dieser Betriebsmodus ist insbesondere für eine langsame Vorwärtsfahrt von bis zu 25 km/h und schwere Zugarbeiten eines Traktors geeignet.

Es ist ein dritter Betriebszustand vorgesehen, in welchem die erste elektrische Maschine als Generator betrieben wird. Die vierte elektrische Maschine wird als Motor betrieben. Das von der vierten elektrischen Maschine erzeugte mechanische Drehmoment ist mit dem von der Antriebsbaugruppe erzeugte mechanische Drehmoment summierbar auf die erste mechanische Ausgangsschnittstelle übertragbar. Hiermit ist eine leistungsverzweigte Getriebestruktur in einer "torque split"-Konfiguration realisiert. Dieser Betriebsmodus wird bevorzugt für Fahrten des Traktors mit einer höheren Fahrgeschwindigkeit benutzt, beispielsweise 25 bis 50 km/h.

In einer besonders bevorzugten Ausführungsform wird die vierte elektrische Maschine als Motor betrieben. Das von der vierten elektrischen Maschine erzeugte Drehmoment und - falls eine entsprechende Kupplung eingerückt ist - zumindest ein Teil des von der Antriebsbaugruppe erzeugten mechanischen Drehmoments ist auf die zweite mechanische Ausgangsschnittstelle übertragbar. Somit kann die zweite mechanische Ausgangsschnittstelle bzw. die Zapfwelle (PTO) des Traktors einerseits lediglich durch die vierte elektrische Maschine angetrieben werden, und zwar im Wesentlichen unabhängig von der momentan vorliegenden Drehzahl der Antriebsbaugruppe. Andererseits kann die zweite mechanische Ausgangsschnittstelle gleichzeitig von der vierten elektrischen Maschine und zumindest von einem Teil des von der Antriebsbaugruppe erzeugten mechanischen Drehmoments angetrieben werden.

Hinsichtlich eines landwirtschaftlichen oder industriellen Nutzfahrzeugs und insbesondere hinsichtlich eines Traktors wird die eingangs genannte Aufgabe durch die Merkmale des Patentanspruchs 23 gelöst. Demgemäß ist ein landwirtschaftliches oder industrielles Nutzfahrzeug, insbesondere ein Traktor, gekennzeichnet durch ein Antriebssystem nach einem der Patentansprüche 1 bis 22. Zur Vermeidung von Wiederholungen wird auf den vorangegangenen Teil der Beschreibung verwiesen.

In verfahrensmäßiger Hinsicht wird die eingangs genannte Aufgabe durch die Merkmale des Patentanspruchs 24 gelöst.

Das erfindungsgemäße Verfahren zum Betreiben eines Antriebssystems für ein landwirtschaftliches oder industrielles Nutzfahrzeug, vorzugsweise für einen Traktor, nach dem Oberbegriff des Patentanspruchs 1 ist dadurch gekennzeichnet, dass eine dritte elektrische Maschine vorgesehen ist, deren Welle reversibel mit der ersten mechanischen Ausgangsschnittstelle verbindbar ist, und dass die Wellen der zweiten und dritten elektrischen Maschine synchron miteinander koppelbar sind.

Da das Verfahren insbesondere zum Betreiben eines Antriebssystems nach einem der Ansprüche 1 bis 22 vorgesehen ist, wird zur Vermeidung von Wiederholungen auf den vorangegangenen Teil der Beschreibung verwiesen. Auch bezüglich der Verfahrensansprüche 25 bis 30, welche im Wesentlichen konkrete Verfahrensschritte zum Betreiben eines Antriebssystems nach einem der Ansprüche 6 bis 11 betreffen, wird zur Vermeidung von Wiederholungen auf den vorangegangenen Teil der Beschreibung verwiesen.

Es gibt nun verschiedene Möglichkeiten, die Lehre der vorliegenden Erfindung in vorteilhafter Weise auszugestalten und weiterzubilden. Dazu ist einerseits auf die dem Patentanspruch 1 nachgeordneten Patentansprüche und andererseits auf die nachfolgende Erläuterung der bevorzugten Ausführungsbeispiele der Erfindung anhand der Zeichnung zu verweisen. In Verbindung mit der Erläuterung der bevorzugten Ausführungsbeispiele der Erfindung anhand der Zeichnung werden auch im Allgemeinen bevorzugte Ausgestaltungen und Weiterbildungen der Lehre erläutert. In der Zeichnung zeigen
- Fig. 1: ein Stickdiagramm eines erstes Ausführungsbeispiels eines erfindungsgemäßen Antriebssystems,
- Fig. 2: ein Stickdiagramm eines zweites Ausführungsbeispiel eines erfindungsgemäßen Antriebssystems,
- Fig. 3: eine perspektivische Ansicht einer Anordnung elektrischer Maschinen,
- Fig. 4: eine perspektivische Ansicht eines Gehäuseteils aus Fig. 3,
- Fig. 5: eine Schnittansicht bzw. eine Draufsicht eines Blechschnitts des Gehäuseteils aus Fig. 4 und
- Fig. 6: in einer schematischen Darstellung ein Schaubild einer möglichen Verschaltung von zwei elektrischen Maschinen.

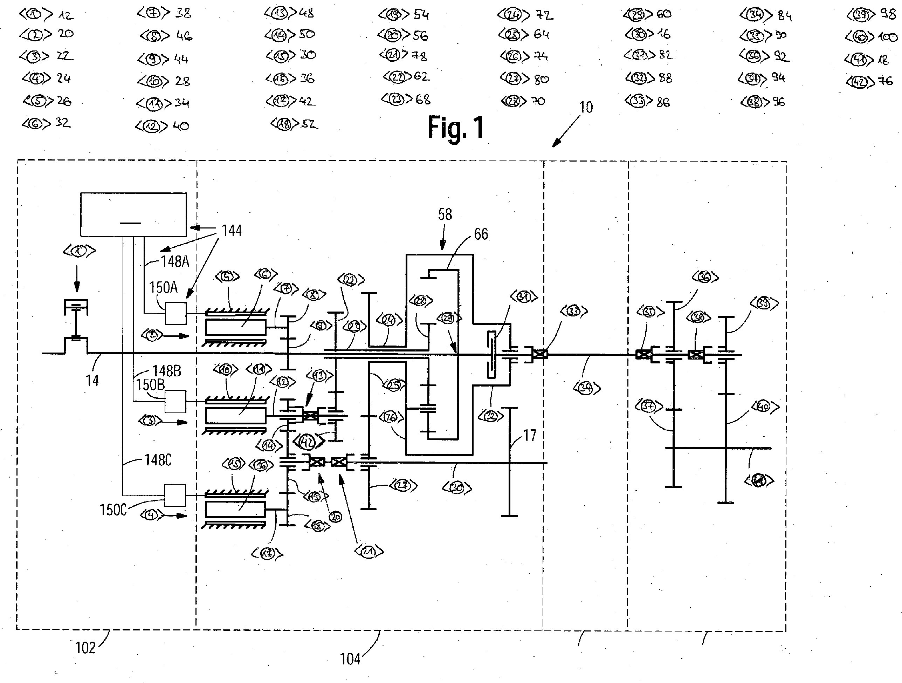

In den Fig. sind gleiche oder ähnliche Baugruppen mit denselben Bezugszeichen gekennzeichnet. Fig. 1 zeigt den Antriebssystem 10 eines in den Fig. nicht vollständig gezeigten landwirtschaftliche Nutzfahrzeugs bzw. Traktors. Der Traktor umfasst eine Antriebsbaugruppe 12, welche einen Verbrennungsmotor aufweist und welche im Folgenden der Einfachheit halber mit Verbrennungsmotor 12 bezeichnet wird. Der Verbrennungsmotor 12 ist mit einer Antriebswelle 14 gekoppelt, mit welcher weitere Komponenten des Antriebssystems 10 antreibbar sind.

Mit dem Antriebssystem 10 wird eine erste mechanische Ausgangsschnittstelle 16 angetrieben, wobei die erste Ausgangsschnittstelle 16 zum Antreiben der (in Fig. 1 nicht gezeigten) Hinterachse des Traktors und zusätzlich zum Antreiben der (in Fig. 1 nicht gezeigten) Vorderachse bzw. der Räder der Vorderachse des Traktors dient. Eine diesbezügliche Kopplungsmöglichkeit zu einer Vorderachse ist mit dem mit Bezugszeichen 17 gekennzeichneten Zahnrad angedeutet. Weiterhin ist eine zweite mechanische Ausgangsschnittstelle 18 (hier auch als Zapfwelle bezeichenbar) vorgesehen, die zum Antreiben eines an den Traktor ankoppelbaren (in Fig. 1 nicht gezeigten) Arbeitsgeräts dient.

Erfindungsgemäß ist eine erste, eine zweite und eine dritte elektrische Maschine 20, 22, 24 vorgesehen. Die elektrischen Maschinen 20, 22, 24 sind im Wesentlichen baugleich ausgebildet und weisen daher eine vergleichbare Leistungscharakteristik auf. Die elektrischen Maschinen 20, 22 und 24 weisen jeweils einen Stator 26, 28 und 30 sowie jeweils einen Rotor 32, 34 und 36 auf. Der Rotor 32 ist drehfest mit der Welle 38, der Rotor 34 ist drehfest mit der Welle 40 und der Rotor 36 ist drehfest mit der Welle 42 verbunden. Der Rotor 32 der ersten elektrischen Maschine 20 steht mittels der Welle 38 und einem aus dem zwei Zahnrädern 44, 46 bestehenden Zwischengetriebe mit der Antriebswelle 14 ständig in Drehverbindung.

Der Rotor 34 der zweiten elektrischen Maschine 22 samt der Welle 40 ist mittels der Schaltstelle 48 mit dem Zahnrad 50 drehfest verbindbar. Das Zahnrad 52 ist drehfest mit der Welle 42 verbunden. Sowohl das Zahnrad 50 als auch das Zahnrad 52 kämmt jeweils mit dem Zahnrad 54. Mit der Schaltstelle 56 ist das Zahnrad 54 drehfest mit der ersten mechanischen Ausgangsschnittstelle 16 bzw. dem Fahrantrieb des Traktors verbindbar. Somit sind die Wellen 40, 42 der Rotoren 34, 36 der zweiten elektrischen Maschine 22 und der dritten elektrischen Maschine 24 in erfindungsgemäßer Weise synchron miteinander koppelbar, sofern die Schaltstelle 48 aus Fig. 1 sich in dem linken eingerückten Zustand befindet.

Es ist ein Summierungsgetriebe 58 vorgesehen, mit welchem das von dem Verbrennungsmotor 12 erzeugte Drehmoment und das von einer elektrischen Maschine erzeugte Drehmoment, beispielsweise von der zweiten elektrischen Maschine 22, summiert werden kann. Das Summierungsgetriebe 58 ist im Wesentlichen in Form eines Planetengetriebes ausgebildet und umfasst drei mechanischen Schnittstellen 60, 62, 64. Die erste Schnittstelle 60 des Summierungsgetriebes 58 ist mit der Antriebswelle 14 und dem Hohlrad 66 des Summierungsgetriebes 58 drehfest verbunden. Die zweite mechanische Schnittstelle 62 ist durch das mit dem Bezugszeichen 62 gekennzeichnete Zahnrad dargestellt, welches drehfest mit der Hohlwelle 68 und dem Sonnenrad 70 des Summierungsgetriebes 58 verbunden ist. Die dritte mechanische Schnittstelle 64 ist durch das mit demselben Bezugszeichen gekennzeichnete Zahnrad 64 gebildet, welches über die Hohlwelle 72 drehfest mit dem Planetenträger 74 des Summierungsgetriebes 58 in Verbindung steht.

Wenn die Schaltstelle 48 sich in ihrem rechten eingerückten Zustand befindet, ist die Welle 40 der zweiten elektrischen Maschine 22 drehfest mit dem Zahnrad 76 verbunden. Das Zahnrad 76 kämmt mit dem Zahnrad 62, welches die zweite Schnittstelle des Summierungsgetriebes 58 darstellt. Somit ist zwischen der zweiten elektrischen Maschine 22 und der zweiten Schnittstelle 62 des Summierungsgetriebes 58 ein Drehmomentfluss herstellbar. Mit der Schaltstelle 78 ist eine drehfeste Verbindung zwischen der ersten Ausgangsschnittstelle 16 und dem Zahnrad 80 herstellbar. Das Zahnrad 80 kämmt mit dem Zahnrad 64 bzw. mit der dritten Schnittstelle 64 des Summierungsgetriebes 58.

Mit der in Form einer Lamellenkupplung ausgebildeten Kupplung 82 ist eine drehfeste Verbindung zwischen der Antriebswelle 14 und der Welle 84 herstellbar. Mit der Schaltstelle 86 ist eine drehfeste Verbindung zwischen der Welle 84 und dem Rotationsteil 88 herstellbar, wobei das Rotationsteil 88 drehfest mit dem Planetenträger 74 verbunden ist.

Mit der Schaltstelle 90 kann eine drehfeste Verbindung zwischen der Welle 84 und dem Zahnrad 92 hergestellt werden. Das Zahnrad 92 kämmt mit dem Zahnrad 94, welches drehfest mit der zweiten mechanischen Ausgangsschnittstelle 18 verbunden ist. Mit der Schaltstelle 96 ist eine drehfeste Verbindung zwischen der Welle 84 und dem Zahnrad 98 herstellbar. Das Zahnrad 98 kämmt mit dem Zahnrad 100, welches drehfest mit der zweiten mechanischen Ausgangsschnittstelle 18 verbunden ist. Somit kann mit der Schaltstelle 90 ein Drehmomentfluss von der Welle 84 über die Zahnradkette 92, 94 auf die zweite mechanische Ausgangsschnittstelle 18 einerseits und mit der Schaltstelle 96 ein Drehmomentfluss von der Welle 84 über die Zahnradkette 98, 100 auf die zweite mechanische Ausgangsschnittstelle 18 andererseits in jeweils unterschiedlichen Übersetzungsverhältnissen hergestellt werden.

Mit den gestrichelt eingezeichneten Bereichen 102 bis 108 sind die folgenden Baugruppen des in Fig. 1 gezeigten Traktors angedeutet: 102 kennzeichnet die Baugruppe um den Verbrennungsmotor 12, 104 kennzeichnet das Getriebegehäuse, 106 kennzeichnet das Hinterachsdifferentialgetriebegehäuse und 108 kennzeichnet das Zapfwellengehäuse. Lediglich schematisch ist angedeutet, dass die erste mechanische Schnittstelle 16 in das Hinterachsdifferentialgetriebegehäuse 106 eintritt.

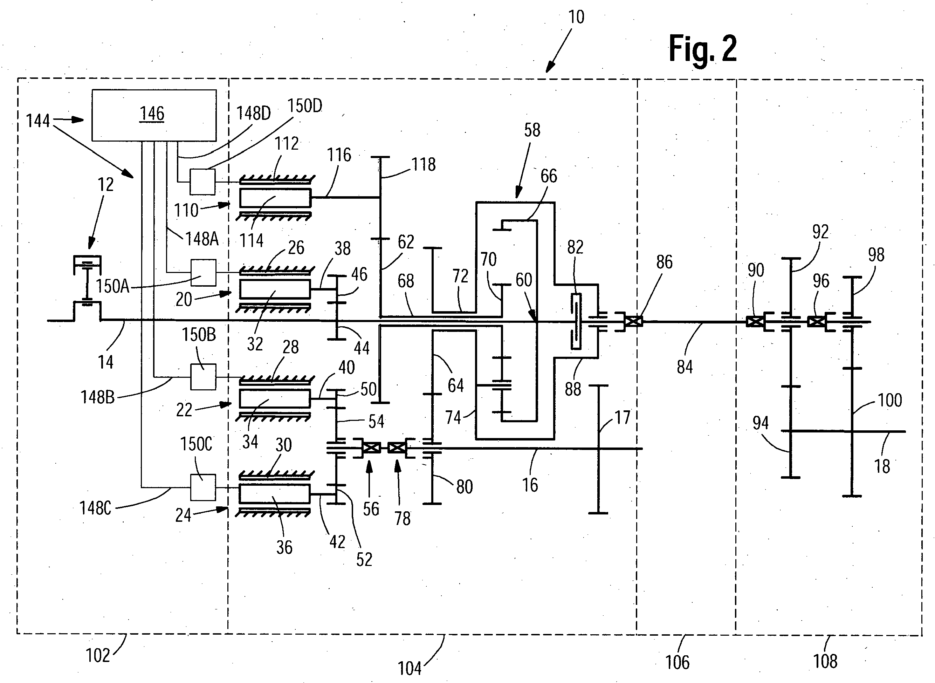

Fig. 2 zeigt ein weiteres Ausführungsbeispiel der vorliegenden Erfindung, in welchem eine vierte elektrische Maschine 110 vorgesehen ist. Die vierte elektrische Maschine 110 weist einen Stator 112 und einen Rotor 114 auf. Der Rotor 114 ist drehfest mit der Welle 116 und dem Zahnrad 118 verbunden. Das Zahnrad 118 kämmt mit dem Zahnrad 62 bzw. der zweiten Schnittstelle 62 des Summierungsgetriebes 58. Die elektrischen Maschinen 20, 22, 24, 110 sind im Wesentlichen baugleich ausgebildet und weisen eine im Wesentlichen vergleichbare Leistungscharakteristik auf.

Das in Fig. 2 gezeigte Ausführungsbeispiel eines Antriebssystems 10 ist im Wesentlichen zu dem in Fig. 1 gezeigten Ausführungsbeispiel des Antriebssystems 10 vergleichbar ausgebildet. Ein Unterschied hierbei ist, dass die elektrische Maschine 110 über die Welle 116 und das Zahnrad 118 stets mit der zweiten Schnittstelle 62 des Summierungsgetriebes 58 steht. Die elektrische Maschine 22 ist in diesem Ausführungsbeispiel nicht unmittelbar mit der zweiten Schnittstelle 62 des Summierungsgetriebes 58 verbindbar, da eine der Schaltstelle 48 aus Fig. 1 entsprechende Schaltstelle in dem Ausführungsbeispiel gemäß Fig. 2 nicht vorgesehen ist. Der Rotor 34 der elektrischen Maschine 22 steht mit dem Rotor 36 der elektrischen Maschine 24 über die jeweiligen Wellen 40, 42 und die Zahnräder 50, 52, 54 stets in synchroner Drehverbindung.

Bezüglich der Ansteuerung der elektrischen Maschinen 20, 22, 24 und gegebenenfalls 110 ist die elektronische Ansteuervorrichtung 144 vorgesehen. Die Ansteuervorrichtung 144 umfasst eine elektronische Steuereinheit 146, welche - zumindest wie in den Fig. 1 bis 2 gezeigt - auch Baugruppen einer Leistungselektronik wie auch einer Wandlerelektronik zum Wandeln von Wechselstrom in Gleichstrom und umgekehrt aufweisen kann. Die elektrische Maschinen 20, 22, 24, 110 sind mit Versorgungsleitungen 148A bis 148D entsprechend mit der elektronischen Steuereinheit 146 verbunden, wobei jeweils eine Wandler- bzw. Umrichtereinheit 150A bis 150D vorgesehen ist. In Abhängigkeit der Ansteuerung einer elektrischen Maschine 20, 22, 24, 110 durch die elektronische Steuereinheit 146 ist es möglich, eine der elektrischen Maschinen 20, 22, 24, 110 als Generator oder als Motor zu betreiben. Falls eine elektrische Maschine 20, 22, 24, 110 als Generator betrieben wird, wird mit der von der elektrischen Maschine 20, 22, 24, 110 erzeugten elektrischen Energie mindestens eine der anderen elektrischen Maschinen angetrieben. Der elektrische Leistungsfluss erfolgt hierbei über die Versorgungsleitungen 148A bis 148D, welche zu einem Zwischenstromkreis der elektronischen Ansteuervorrichtung 144 gehören. Somit speist die als Generator betriebene elektrische Maschine 20, 22, 24 und/oder 110 den von ihr erzeugten elektrischen Strom in den Zwischenkreis ein bzw. stellt den elektrischen Strom der elektronischen Steuereinheit 146 zur Verfügung. Mit diesem elektrischen Strom kann somit mindestens eine andere elektrische Maschine versorgt werden.

Im Folgenden wird auf drei bevorzugte Betriebsmodi eines Traktors eingegangen, der mit einem in den Fig. 1 bis 2 schematisch gezeigten Antriebssystem ausgestattet ist. Neben diesen drei bevorzugten Betriebsmodi sind weitere Betriebszustände des Traktors denkbar, auf die allerdings nicht explizit eingegangen wird.

In einem ersten Betriebszustand, der in dem Antriebssystem 10 gemäß Fig. 2 möglich ist, wird die erste elektrische Maschine 20 als Generator betrieben. Die zweite und die dritte elektrische Maschine 22, 24 werden als Motor betrieben. Die Rotoren 34, 36 der zweiten und der dritten elektrischen Maschine 22, 24 sind mit der ersten mechanischen Ausgangsschnittstelle 16 verbunden, das heißt die Schaltstelle 56 befindet sich in ihrem linken eingerückten Zustand. Somit wird in diesem Betriebsmodus der Traktor lediglich durch die zwei elektrischen Maschinen 22, 24 angetrieben. Der erste Betriebsmodus ist für einen Fahrgeschwindigkeitsbereich eines Traktors von 0 bis zu 25 km/h in Vorwärts- und Rückwärtsrichtung vorgesehen.

Dieser erste Betriebszustand ist auch in dem Antriebssystem 10 aus Fig. 1 möglich. Hierbei befindet sich die Schaltstelle 48 in ihrem linken eingerückten Zustand und die Schaltstelle 56 befindet sich in ihrem linken eingerückten Zustand. Somit sind die zwei elektrischen Maschinen 22, 24 über das Zahnrad 54 synchron miteinander gekoppelt und treiben die erste mechanische Ausgangsschnittstelle 16 an.

In einem zweiten Betriebszustand, der in dem Antriebssystem 10 gemäß Fig. 2 möglich ist, ist mit einem Teil des von der Antriebsbaugruppe 12 erzeugten mechanischen Drehmoments die als Generator betriebene vierte elektrische Maschine 110 antreibbar. Mit der von der vierten elektrischen Maschine 110 erzeugten elektrischen Energie werden die zweite und dritte elektrische Maschine 22, 24 als Motor betrieben. Das von der zweiten und dritten elektrischen Maschinen 22, 24 erzeugte mechanische Drehmoment ist mit einem weiteren Teil des von der Antriebsbaugruppe 12 erzeugten mechanischen Drehmoments auf die erste mechanische Ausgangsschnittstelle 16 übertragbar. In diesem Betriebszustand befinden sich die Schaltstelle 56 in ihrem linken eingerückten und die Schaltstelle 78 in ihrem rechten eingerückten Zustand. Dementsprechend verzweigt sich das von der Antriebsbaugruppe 12 erzeugte mechanische Drehmoment in dem Summierungsgetriebe 58 einerseits auf die vierte elektrische Maschine 110 (über die Schnittstelle 60 des Planetengetriebes 58, das Hohlrad 66, den Planetenträger 74, das Sonnenrad 70, die Hohlwelle 68, das Zahnrad 62, das Zahnrad 118 und die Welle 116) und andererseits (über die Schnittstelle 60, das Hohlrad 66, den Planetenträger 74, die Hohlwelle 72, das Zahnrad 64, das Zahnrad 80 und somit) auf die Ausgangsschnittstelle 16. In diesem zweiten Betriebszustand wird das Antriebssystem 10 in einer "speed split"-Konfiguration betrieben. Der zweite Betriebszustand ist für eine langsame Vorwärtsfahrt bis ca. 25 km/h mit schwerer Zugarbeit eines Traktors gedacht.

Dieser zweite Betriebszustand wäre auch in dem Antriebssystem 10 gemäß Fig. 1 möglich, wenn die Schaltstellen 48 sich in ihrem rechten eingerückten Zustand befindet und Schaltstelle 56 sich in ihrem linken eingerückten Zustand befindet und wenn die Schaltstelle 78 sich in ihrem rechten eingerückten Zustand befindet. Dann ist mit einem Teil des von der Antriebsbaugruppe 12 erzeugten mechanischen Drehmoments die als Generator betriebene zweite elektrische Maschine 22 antreibbar. Mit der von der zweiten elektrischen Maschine 22 erzeugten elektrischen Energie wird die dritte elektrische Maschine 24 als Motor betrieben. Das von dritten elektrischen Maschinen 24 erzeugte mechanische Drehmoment ist mit einem weiteren Teil des von der Antriebsbaugruppe 12 erzeugten mechanischen Drehmoments (über die Schnittstelle 60, das Hohlrad 66, den Planetenträger 74, die Hohlwelle 72, die Zahnräder 64 und 80) auf die erste mechanische Ausgangsschnittstelle 16 übertragbar.

In einem dritten Betriebszustand, der in dem Antriebssystem 10 gemäß Fig. 2 möglich ist, wird die erste elektrische Maschine 20 als Generator betrieben. Die vierte elektrische Maschine 110 wird als Motor betrieben. Das von der vierten elektrischen Maschine 110 erzeugte mechanische Drehmoment ist mit dem von der Antriebsbaugruppe 12 erzeugte mechanische Drehmoment in dem Summierungsgetriebe 58 summierbar auf die erste mechanische Ausgangsschnittstelle 16 übertragbar. In diesem Betriebszustand befindet sich die Schaltstelle 56 in ihren rechten nicht eingerückten Zustand und die Schaltstelle 78 in ihrem rechten eingerückten Zustand. In diesem dritten Betriebszustand wird das Antriebssystem 10 in einer "torque split"-Konfiguration betrieben. Der dritte Betriebszustand ist für hohe Fahrgeschwindigkeiten eines Traktors gedacht, in welchem beispielsweise Geschwindigkeiten von 25 bis 50 km/h vorliegen. Dementsprechend kann mit der vierten elektrischen Maschine 110 - entsprechend ihrer Drehzahl und ihrer Drehrichtung - um eine vorgebbare Drehzahl der Antriebsbaugruppe 12 die Drehzahl der ersten Ausgangsschnittstelle 16 erhöht oder verringert werden. So könnte beispielsweise der Traktor mit einer Geschwindigkeit von ca. 38 km/h allein von der Antriebsbaugruppe 12 ohne Mitwirkung der vierten elektrischen Maschine 110 angetrieben werden. Durch das Zuschalten der vierten elektrischen Maschine 110 bei gleichbleibender Drehzahl der Antriebsbaugruppe könnte das Fahrzeug dann um ca. 12 km/h schneller oder langsamer fahren, mit der vierten elektrischen Maschine 110 also die Drehzahl an Ausgangsschnittstelle 16 entsprechend verringert oder vergrößert werden.

Der dritte Betriebszustand ist auch in dem Antriebssystem 10 gemäß Fig. 1 denkbar. Die Schaltstelle 48 befindet sich in ihrem rechten eingerückten Zustand und die Schaltstelle 78 befindet sich in ihrem rechten eingerückten Zustand. Die erste elektrische Maschine 20 wird als Generator betrieben und die zweite elektrische Maschine 22 wird als Motor betrieben. Somit wird das von der zweiten elektrischen Maschine 22 erzeugte mechanische Drehmoment über die Welle 40 auf die Zahnräder 76, 62 auf das Summierungsgetriebe 58 übertragen und mit dem von der Antriebsbaugruppe 12 erzeugten und über die Antriebswelle 14 in das Summierungsgetriebe 58 eingegebene Drehmoment summiert über die Zahnräder 64, 80 auf die erste mechanische Ausgangsschnittstelle 18 übertragen.

In den drei zuvor beschriebenen Betriebsmodi ist in den in Fig. 2 gezeigten Antriebssystem 10 die vierte elektrische Maschine 110 als Motor betreibbar. Das von der vierten elektrischen Maschine 110 erzeugte Drehmoment kann auf die zweite mechanische Ausgangsschnittstelle 18 dann übertragen werden, wenn die Schaltstelle 86 sich in ihrem eingerückten Zustand befindet und entweder die Schaltstelle 90 oder die Schaltstelle 96 sich ebenfalls in ihrem eingerückten Zustand befindet. Somit wird das von der vierten elektrischen Maschine 110 erzeugte Drehmoment über die Welle 116, die Zahnräder 118, 62, die Hohlwelle 68, das Sonnenrad 70, den Planetenträger 74, die Welle 84 und entweder auf die Zahnradkette 92, 94 oder auf die Zahnradkette 98, 100 übertragen. Falls die Lamellenkupplung 82 aus den Fig. 1 und 2 eingerückt ist, kann in dem Summierungsgetriebe 58 das von der vierten elektrischen Maschine 110 erzeugte mechanische Drehmoment mit einem Teil des von der Antriebsbaugruppe 12 erzeugten mechanischen Drehmoments auf die zweite mechanische Ausgangsschnittstelle 18 übertragen werden. Dementsprechend ist die zweite mechanische Ausgangsschnittstelle 18 einerseits lediglich durch das von der vierten elektrischen Maschine 110 erzeugte Drehmoment antreibbar. Andererseits ist die zweite mechanische Ausgangsschnittstelle 18 von dem von der vierten elektrischen Maschine 110 und von einem Teil des von der Antriebsbaugruppe 12 erzeugten mechanischen Drehmoments summiert antreibbar.

Die zweite mechanische Antriebsschnittstelle 18 ist in vergleichbarer Weise mit dem Antriebssystem 10 aus Fig. 1 dann antreibbar, falls die Schaltstelle 48 sich in ihrem rechten eingerückten Zustand befindet und die zweite elektrische Maschine 22 als Motor betrieben wird. Dann wird nämlich das von der zweiten elektrischen Maschine erzeugte mechanische Drehmoment über die Zahnräder 76, 62 und die Hohlwelle 68 auf das Sonnenrad 70 des Summierungsgetriebes 58 übertragen. Über den Planetenträger 74 wird dieses Drehmoment bei eingerückter Schaltstelle 86 über die Welle 84 entweder über die Zahnradkette 92, 94 oder über die Zahnradkette 98, 100 auf die zweite mechanische Ausgangsschnittstelle 18 übertragen, je nachdem, ob die Schaltstelle 90 oder die Schaltstelle 96 sich in ihrem eingerückten Zustand befindet. Hierzu wäre zweckmäßigerweise die erste elektrische Maschine 20 als Generator und die dritte elektrische Maschine 24 als Motor zu betreiben und damit mit der dritten elektrischen Maschine 24 bei eingerückter Schaltstelle 78 mit der ersten Ausgangsschnittstelle 16 verbindbar.

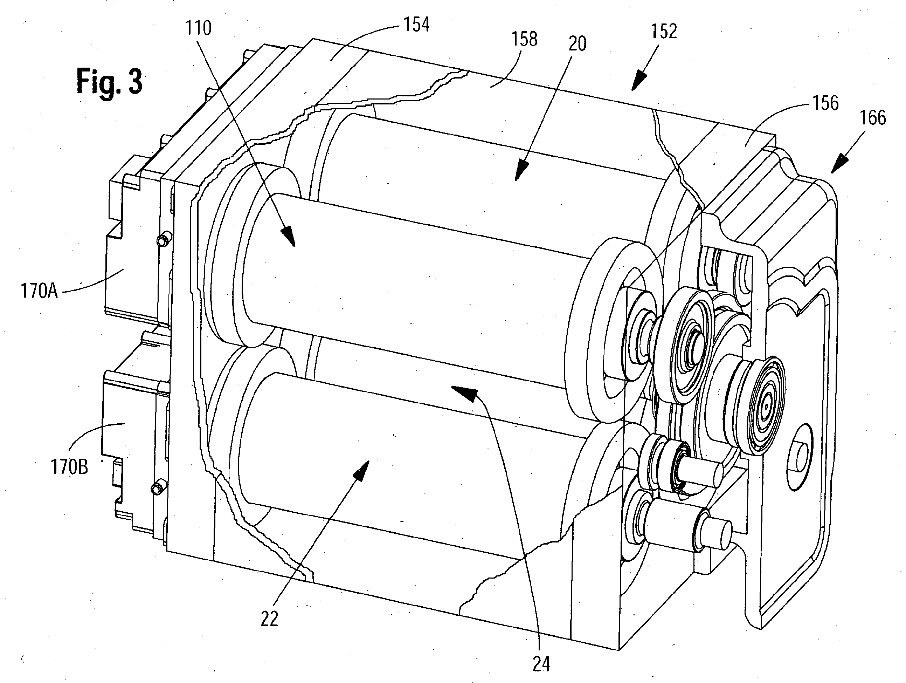

In Fig. 3 ist eine Gehäuseanordnung 152 gezeigt, in bzw. an welcher erfindungsgemäß die vier elektrischen Maschinen 20, 22, 24 und 110 angeordnet bzw. aufgenommen sind. Jeweils zwei elektrische Maschinen - z.B. 22, 24 oder 22, 110 - sind räumlich benachbart zueinander angeordnet. Die elektrische Maschine 20 ist jeweils benachbart zu den elektrischen Maschinen 110 und 24 sowie über die Diagonale zu der elektrischen Maschine 22 benachbart angeordnet. Dies gilt sinngemäß für die anderen drei elektrischen Maschinen 22, 24, 110.

Die Statoren 26, 28, 30, 112 der elektrischen Maschinen 20, 22, 24, 110 sind in der gemeinsamen Gehäuseanordnung 152 angeordnet. Die elektrischen Maschinen 20, 22, 24, 110 sind in der Gehäuseanordnung 152 derart angeordnet, dass die Wellen 38, 40, 42, 116 der Rotoren 32, 34, 36, 114 der elektrischen Maschinen 20, 22, 24, 110 auf einer Seite aus der Gehäuseanordnung 152 austreten. Die Gehäuseanordnung 152 weist zwei jeweils in Form eines Lagerschilds ausgebildete Abschlussteile 154, 156 auf. An den zwei Abschlussteilen 154, 156 sind die Statoren 26, 28, 30, 112 der vier elektrische Maschinen 20, 22, 24, 110 befestigbar.

Das Abschlussteil 154 ist an einer Seite der Gehäuseanordnung 152 angeordnet. Das andere Abschlussteil 156 ist an der hierzu gegenüberliegenden Seite der Gehäuseanordnung 152 angeordnet.

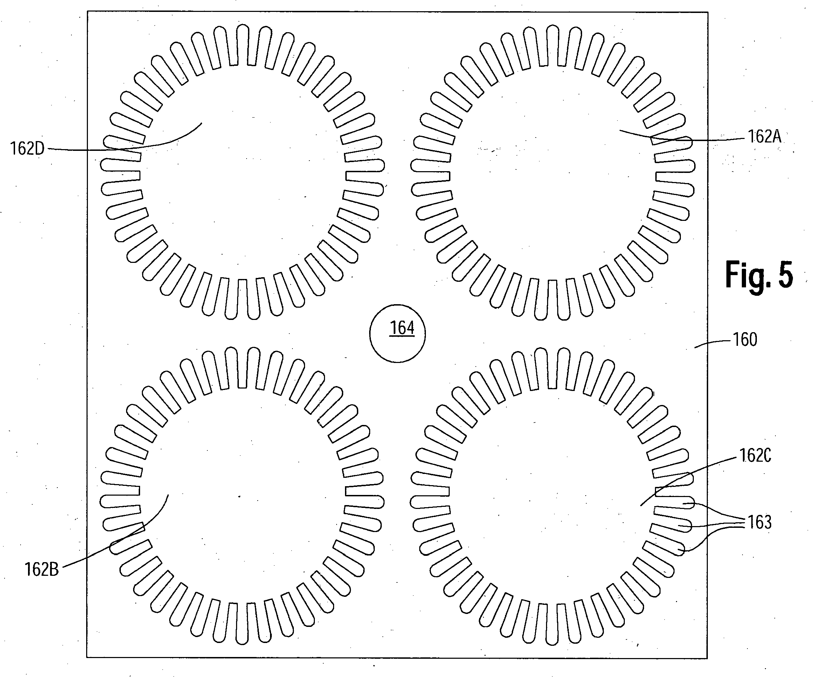

Die Gehäuseanordnung 152 weist einen mittleren Teil 158 auf, welcher eine die vier elektrischen Maschinen 20, 22, 24, 110 aufnehmende Metallkonstruktion aufweist. Die Metallkonstruktion in Form eines Metallstapelblocks ausgestaltet und weist einzelne zu einem Blechstapel zusammengefasste Bleche auf. Ein solches Blech 160 des den mittleren Teil 158 bildenden Blechstapels ist in Fig. 5 gezeigt. Das Blech 160 weist im Wesentlichen kreisförmige Aussparungen 162A bis 162D für die Statoren 26, 28, 30, 112 der vier elektrischen Maschinen 20, 22, 24, 110 auf. Die im Wesentlichen in radialer Richtung einer Aussparung 162A bis 162D angeordneten Nuten/Rillen 163 dienen zur Aufnahme der - nicht gezeigten - Statorwicklungen. Durch die Aussparung 164 verläuft die Antriebswelle 14. Entsprechende Aussparungen sind auch in den beiden Abschlussteilen 154, 156 vorgesehen. Somit erstreckt sich die Welle 14 durch die Gehäuseanordnung 152.

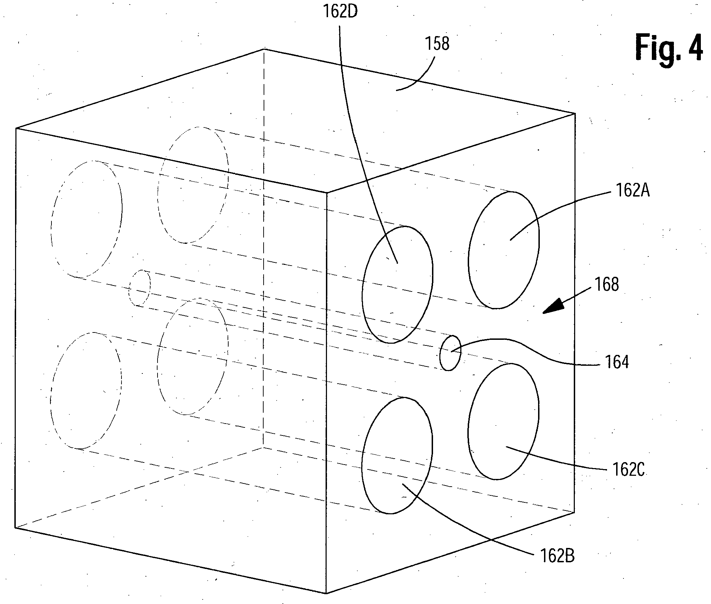

Fig. 4 zeigt den aus den einzelnen Blechen 160 zusammengesetzten mittleren Teil 158 der Gehäuseanordnung 152, wo zur einfacheren Darstellung die vier Aussparungen 162A bis 162D (ohne die Nuten/Rillen 163) für die vier elektrischen Maschinen 20, 22, 24, 110 sowie die mittig angeordnete Aussparung 164 für die Antriebswelle 14 erkennbar ist. Somit kann der mittlere Teil 158 der Gehäuseanordnung 152 dadurch gebildet werden, dass mehrere in Fig. 5 gezeigte Bleche 160 elektrisch isoliert voneinander auf die in Fig. 4 gezeigte Stirnseite 168 des mittleren Teils 158 montiert werden.

Die elektrischen Maschinen 20, 22, 24, 110 sind räumlich derart angeordnet, dass deren Wellen 38, 40, 42, 116 im Wesentlichen parallel zueinander orientiert sind und von einer Seite der Gehäuseanordnung 152 abragen, sie treten nämlich durch das rechte Abschlussteil 156 durch. Von dem mittleren Teil 158 aus rechts in Fig. 3 gesehen ist - lediglich schematisch - ein Teil der Getriebestruktur des beispielsweise in den Fig. 1 und 2 angedeuteten Getriebegehäuses 104 nachgeordnet, welches in Fig. 3 mit dem Bezugszeichen 166 gekennzeichnet ist. Von dem mittleren Teil 158 aus links in Fig. 3 gesehen sind - lediglich schematisch angedeutet - zwei Leistungselektronikbaugruppen 170A und 170B angedeutet, die an dem linken Abschlussteil 154 der Gehäuseanordnung 152 befestigt sind und welche jeweils mit den elektrischen Maschinen 20, 22, 24, 110 in elektrischer Verbindung stehen.

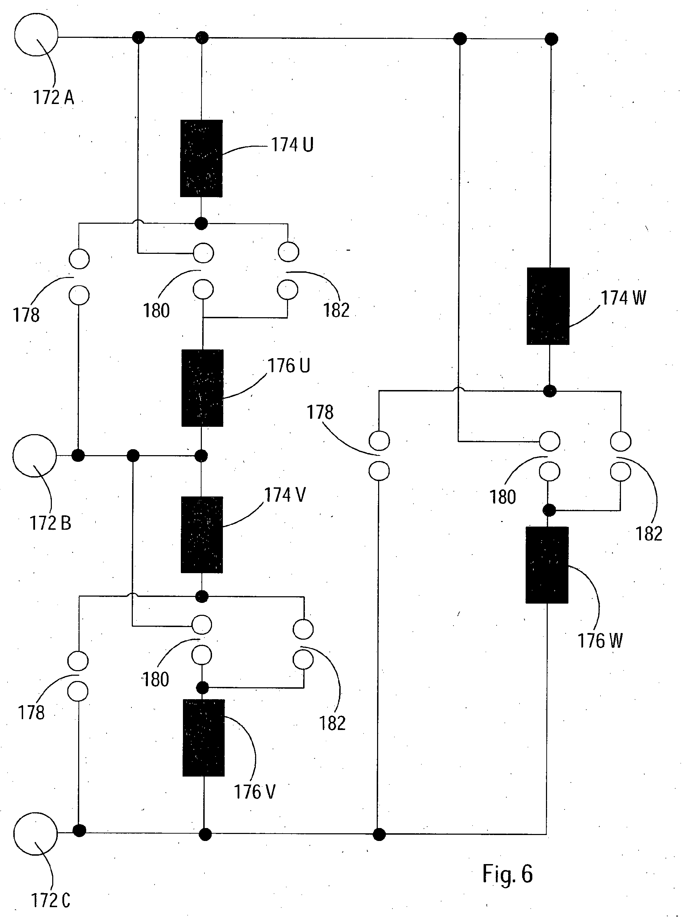

Fig. 6 zeigt in einer schematischen Darstellung ein Schaubild einer möglichen Verschaltung zweier elektrischer Maschinen. So sind mit den Bezugszeichen 172A bis 172C die drei Anschlüsse eines in Fig. 6 nicht gezeigten Umrichters gezeigt, an welchem die zwei elektrischen Maschinen bzw. deren Wicklungen 174U, 174V, 174W, 176U, 176V, 176W angeschlossen sind. Hierbei gehören die Wicklungen 174U, 174V, 174W zu der ersten elektrischen Maschine und die Wicklungen 176U, 176V, 176W zu der zweiten elektrischen Maschine. Mit den Bezugszeichen 178, 180 und 182 sind Schalter angedeutet, welche geöffnet oder geschlossen sein können, so dass zwischen den jeweils dort gezeigten beiden Kreisen eines Schalters eine elektrische Leitungsverbindung hergestellt oder unterbrochen werden kann. Falls die Schalter 178 und 180 geschlossen und die Schalter 182 geöffnet sind, sind die zwei elektrischen Maschinen, deren Wicklungen 174U, 174V, 174W, 176U, 176V, 176W in Fig. 6 gezeigt sind, elektrisch parallel zueinander verschaltet. Falls die Schalter 178 und 180 geöffnet und die Schalter 182 geschlossen sind, sind die zwei elektrischen Maschinen, deren Wicklungen 174U, 174V, 174W, 176U, 176V, 176W in Fig. 6 gezeigt sind, elektrisch in Reihe zueinander verschaltet.

Mit dem in Fig. 6 gezeigten elektrischen Schaltkreis können also die zwei als Motor betreibbaren elektrischen Maschinen elektrisch parallel zueinander oder elektrisch in Reihe zueinander verschalten werden. In entsprechender Weise können die Wicklungen 174U, 174V, 174W oder 176U, 176V, 176W einer als Motor betriebenen elektrischen Maschine intern elektrisch parallel, in Reihe, im Stern oder im Dreieck verschaltet werden, was im Einzelnen in Fig. 6 nicht ausgeführt ist.

Abschließend sei ganz besonders darauf hingewiesen, dass die voranstehend erörterten Ausführungsbeispiele lediglich zur Beschreibung der beanspruchten Lehre dienen, diese jedoch nicht auf die Ausführungsbeispiele einschränken.

## Patentansprüche

1. Antriebssystem eines landwirtschaftlichen oder industriellen Nutzfahrzeugs, vorzugsweise eines Traktors, mit einer ein mechanisches Drehmoment erzeugenden Antriebsbaugruppe (12), welche einen Verbrennungsmotor aufweist, einer ersten und einer zweiten elektrischen Maschine (20, 22), einer zum Antreiben mindestens einer Fahrzeugachse dienenden ersten mechanischen Ausgangsschnittstelle (16) und einer zweiten mechanischen Ausgangsschnittstelle (18) als zapfwelle, wobei eine elektrische Maschine (20, 22) einen Rotor (32, 34) aufweist, welcher drehfest mit einer Welle (38, 40) verbunden ist, wobei die Antriebsbaugruppe (12) mit der Welle (38) der ersten elektrischen Maschine (20) in Drehmomentfluss steht, wobei mit der zweiten Ausgangsschnittstelle (18) ein an das Fahrzeug ankoppelbares Arbeitsgerät mechanisch antreibbar ist, wobei die Welle (40) der zweiten elektrischen Maschine (22) reversibel mit der ersten mechanischen Ausgangsschnittstelle (16) verbindbar ist, und wobei eine dritte elektrische Maschine (24) vorgesehen ist, deren Welle (42) reversibel mit der ersten mechanischen Ausgangsschnittstelle (16) verbindbar ist, **dadurch gekennzeichnet, dass** die Wellen (40, 42) der zweiten und drit-ten elektrischen Maschinen (22, 24) mit Hilfe einer extra hierfür vorgesehenen, mit der Welle (40) der zweiten elektrischen Maschine (22) direkt verbundenen Getriebeschaltstelle (48) synchron miteinander koppelbar sind, wodurch eine der zweiten und dritten elektrischen Maschinen (22,24) in einen lastlosen Zustand verbracht werden kann und die andere elektrische Maschine (22, 24) in dieser zeit für einen drehmomentunterbrechungsfreien Antrieb des Fahrzeugs sorgt.

2. Antriebssystem nach Anspruch 1, **dadurch gekennzeichnet, dass** die Wellen (40, 42) der zweiten und dritten elektrischen Maschine (22, 24) stets synchron gekoppelt sind, beispielsweise über ein Zahnrad (54), welches insbesondere mit der ersten Ausgangsschnittstelle (16) drehfest in Verbindung verbringbar ist.

3. Antriebssystem nach Anspruch 1 oder 2, **dadurch gekennzeichnet, dass** zumindest eine der elektrischen Maschinen (20; 110) als Generator betreibbar ist und dass mit der von einer elektrischen Maschine (20; 110) erzeugten elektrischen Energie mindestens eine der beiden anderen elektrischen Maschinen (20, 22, 24, 110) antreibbar ist.

4. Antriebssystem nach einem der vorangegangenen Ansprüche, **dadurch gekennzeichnet, dass** ein Zwischenstromkreis (144, 146, 148A bis 148D, 150A bis 150D, 170A, 170B) vorgesehen ist, in welchen eine als Generator betriebene elektrische Maschine (20, 110) den von ihr erzeugten elektrischen Strom einspeist und mit welchem mindestens eine elektrische Maschine (20, 22, 24, 110) mit elektrischem Strom versorgbar ist und dass vorzugsweise der Zwischenstromkreis (144, 146, 148A bis 148D, 150A bis 150D, 170A, 170B) einen Gleichstromkreis aufweist.

5. Antriebssystem nach einem der vorangegangenen Ansprüche, **dadurch gekennzeichnet, dass** mindestens zwei elektrische Maschinen (20, 22, 24, 110) im Wesentlichen baugleich ausgebildet sind und/oder eine im Wesentlichen vergleichbare Leistungscharakteristik aufweisen.

6. Antriebssystem nach einem der vorangegangenen Ansprüche, **dadurch gekennzeichnet, dass** eine Schalteinrichtung (146) vorgesehen ist, mit welcher mindestens zwei als Motor betriebene elektrische Maschinen (22, 24) elektrisch parallel zueinander oder elektrisch in Reihe zueinander verschaltbar sind.

7. Antriebssystem nach einem der vorangegangenen Ansprüche, wobei zwei als Motor betriebene elektrische Maschinen (22, 24, 110) vorgesehen sind, **dadurch gekennzeichnet, dass** zum Verändern des Lastzustands mindestens einer elektrischen Maschine (22, 24, 110), insbesondere der zweiten und der dritten elektrischen Maschine (22, 24), zwei elektrische Maschinen (22, 24) von einer elektrischen Reihenschaltung in eine elektrische Parallelschaltung oder von einer elektrischen Parallelschaltung in eine elektrische Reihenschaltung umschaltbar sind.

8. Antriebssystem nach einem der vorangegangenen Ansprüche, **dadurch gekennzeichnet, dass** die Wicklungen einer als Motor betriebenen elektrischen Maschine (22, 24, 110) intern elektrisch parallel, in Reihe, im Stern oder im Dreieck verschaltbar sind.

9. Antriebssystem nach einem der vorangegangenen Ansprüche, **dadurch gekennzeichnet, dass** zur Beschaltungsänderung einer als Motor betriebenen elektrischen Maschine (22, 24, 110) eine zu dieser elektrischen Maschine (22) synchron gekoppelte weitere elektrische Maschine (24) zunächst derart angesteuert wird, dass mit der weiteren elektrischen Maschine (24) einen drehmomentunterbrechungsfreien Betrieb bei einem lastlosen Zustand der umzuschaltenden elektrischen Maschine (22) möglich ist und dass die Beschaltung der umzuschaltenden elektrischen Maschine (22) in dem Lastzustand der weiteren elektrischen Maschine (24) änderbar ist.

10. Antriebssystem nach einem der vorangegangenen Ansprüche, **dadurch gekennzeichnet, dass** mindestens zwei als Motor betriebene elektrische Maschinen (22, 24) derart ansteuerbar sind, dass eventuell vorliegende Drehmomentungleichförmigkeiten einer einzelnen elektrischen Maschine (22; 24) von einer anderen elektrischen Maschine (24; 22) auf Grund der synchronen Kopplung zumindest weitgehend ausgleichbar ist, insbesondere in einem Betriebszustand, in welchem die mindestens zwei als Motor betriebene elektrische Maschinen (22, 24) mit der ersten und/oder zweiten mechanischen Ausgangsschnittstelle (16, 18) gekoppelt sind.

11. Antriebssystem nach einem der vorangegangenen Ansprüche, **dadurch gekennzeichnet, dass** eine elektrische Maschine (22, 24,110) zumindest größtenteils derart betreibbar ist, dass ein vorgebbarer Feldschwächebereich nicht überschritten wird.

12. Antriebssystem nach einem der vorangegangenen Ansprüche, **dadurch gekennzeichnet, dass** mindestens zwei der drei elektrischen Maschinen (20, 22, 24, 110) in einer gemeinsamen Gehäuseanordnung (152) angeordnet bzw. aufgenommen sind, und/oder dass mindestens zwei der elektrischen Maschinen (20, 22, 24, 110) räumlich benachbart zueinander angeordnet.

13. Antriebssystem nach einem der vorangegangenen Ansprüche, **dadurch gekennzeichnet, dass** mindestens zwei der elektrischen Maschinen (20, 22, 24, 110) räumlich derart angeordnet sind, dass deren Wellen (38, 40, 42, 116) im Wesentlichen parallel zueinander orientiert sind.

14. Antriebssystem nach einem der vorangegangenen Ansprüche, **dadurch gekennzeichnet, dass** eine vierte elektrische Maschine (110) vorgesehen ist, die mit der ersten und/oder der zweiten mechanischen Ausgangsschnittstelle (16, 18) koppelbar ist.

15. Antriebssystem nach einem der vorangegangenen Ansprüche, insbesondere nach Anspruch 14, **dadurch gekennzeichnet, dass** zum Summieren des von der Antriebsbaugruppe (12) erzeugten Drehmoments und des von einer elektrischen Maschine (22, 24, 110) erzeugten Drehmoments ein Summierungsgetriebe (58) mit drei mechanischen Schnittstellen (60, 62, 64 bzw. 88) vorgesehen ist, dass die erste Schnittstelle (60) des Summierungsgetriebes (58) mit einer von der Antriebsbaugruppe (12) angetriebenen Welle (14) gekoppelt ist, dass die zweite Schnittstelle (62) des Summierungsgetriebes (58) mit der Welle (116; 40) einer elektrischen Maschine (110; 22) kuppelbar ist und dass die dritte Schnittstelle (64; 88) des Summierungsgetriebes (58) mit der ersten mechanischen Ausgangsschnittstelle (16) und/oder mit der zweiten mechanischen Ausgangsschnittstelle (18) des Antriebssystems (10) reversibel kuppelbar ist.

16. Antriebssystem nach Anspruch 15, **dadurch gekennzeichnet, dass** das Summierungsgetriebe (58) ein Planetengetriebe (58) aufweist, dass vorzugsweise die von der Antriebsbaugruppe (12) angetriebene Welle (14) mit dem Hohlrad (66) des Planetengetriebes (58) drehfest in Verbindung steht, dass der Planetenträger (74) des Planetengetriebes (58) reversibel mit der ersten Ausgangsschnittstelle (16) kuppelbar ist und dass das Sonnenrad (70) des Planetengetriebes (58) reversibel mit der zweiten, dritten oder vierten elektrischen Maschine (22, 24, 110) kuppelbar ist.

17. Antriebssystem nach Anspruch 16, **dadurch gekennzeichnet, dass** die Welle (116) der vierten elektrischen Maschine (110) mit dem Sonnenrad (70) des Planetengetriebes (58) in Drehverbindung steht.

18. Antriebssystem nach Anspruch 15 oder 16, **dadurch gekennzeichnet, dass** der Planetenträger (74) des Planetengetriebes (58) und/oder eine von der Antriebsbaugruppe (12) angetriebene Welle (14) reversibel mit der zweiten Ausgangsschnittstelle (18) kuppelbar ist, vorzugsweise mittels einer Lamellenkupplung (122) oder einer Klauenkupplung (86).

19. Antriebssystem nach einem der vorangegangenen Ansprüche, **gekennzeichnet durch** einen ersten Betriebszustand, in welchem die erste elektrische Maschine (20) als Generator betrieben wird und die zweite und die dritte elektrische Maschine (22, 24) als Motor betrieben werden und mit der ersten mechanischen Ausgangsschnittstelle (16) verbunden sind.

20. Antriebssystem nach einem der vorangegangenen Ansprüche, insbesondere nach Anspruch 14, **gekennzeichnet durch** einen zweiten Betriebszustand, in welchem mit einem Teil des von der Antriebsbaugruppe (12) erzeugten mechanischen Drehmoments die als Generator betriebene vierte elektrische Maschine (110) antreibbar ist, in welchem die zweite und dritte elektrische Maschine (22, 24) als Motor betrieben werden, und wobei das von der zweiten und dritten elektrischen Maschinen (22, 24) erzeugte mechanische Drehmoment mit einem weiteren Teil des von der Antriebsbaugruppe (12) erzeugten mechanischen Drehmoments auf die erste mechanische Ausgangsschnittstelle (16) übertragbar ist.

21. Antriebssystem nach einem der vorangegangenen Ansprüche, insbesondere nach Anspruch 14, **gekennzeichnet durch** einen dritten Betriebszustand, in welchem die erste elektrische Maschine (20) als Generator betrieben wird, in welchem die vierte elektrische Maschine (110) als Motor betrieben wird und wobei das von der vierten elektrischen Maschine (110) erzeugte mechanische Drehmoment mit dem von der Antriebsbaugruppe (12) erzeugte mechanische Drehmoment summierbar auf die erste mechanische Ausgangsschnittstelle (16) übertragbar ist.

22. Antriebssystem nach einem der vorangegangenen Ansprüche, insbesondere nach Anspruch 14, **dadurch gekennzeichnet, dass** die vierte elektrische Maschine (110) als Motor betreibbar ist und dass das von der vierten elektrischen Maschine (110) erzeugte Drehmoment und - falls eine entsprechende Kupplung (82, 120) eingerückt ist - zumindest ein Teil des von der Antriebsbaugruppe (12) erzeugten mechanischen Drehmoments auf die zweite mechanische Ausgangsschnittstelle (18) übertragbar ist.

23. Landwirtschaftliches oder industrielles Nutzfahrzeug, insbesondere ein Traktor, **gekennzeichnet durch** ein Antriebssystem (10) nach einem der Ansprüche 1 bis 22.

24. Verfahren zum Betreiben eines Antriebssystems nach einem der Ansprüche 1 bis 22, wobei das Antriebssystem (10) eine ein mechanisches Drehmoment erzeugende Antriebsbaugruppe (12), welche einen Verbrennungsmotor aufweist, eine erste und eine zweite elektrische Maschine (20, 22), eine zum Antreiben mindestens einer Fahrzeugachse dienende erste mechanische Ausgangsschnittstelle (16) und eine zweite mechanischen Ausgangsschnittstelle (18) als Zapfwelle aufweist, wobei eine elektrische Maschine (20, 22) einen Rotor (32, 34) aufweist, welcher drehfest mit einer Welle (38, 40) verbunden ist, wobei die Antriebsbaugruppe (12) mit der Welle (38) der ersten elektrischen Maschine (20) in Drehmomentfluss steht, wobei mit der zweiten Ausgangsschnittstelle (18) ein an das Fahrzeug ankoppelbares Arbeitsgerät mechanisch antreibbar ist, wobei die Welle (40) der zweiten elektrischen Maschine (22) reversibel mit der ersten mechanischen Ausgangsschnittstelle (16) verbindbar ist, und wobei eine dritte elektrische Maschine (24) vorgesehen ist, deren Welle (42) reversibel mit der ersten mechanischen Ausgangsschnittstelle (16) verbindbar ist, **dadurch gekennzeichnet, dass** die Wellen (40, 42) der zweiten und dritten elektrischen Maschinen (22, 24) mit Hilfe einer extra hierfür vorgesehenen, mit der Welle (40) der zweiten elektrischen Maschine (22) direkt verbundenen Getriebeschaltstelle (48) synchron miteinander koppelbar sind, wodurch eine der zweiten und dritten elektrischen Maschinen (22, 24) in einen lastlosen Zustand verbracht werden kann und die andere elektrische Maschine (22, 24) indieser Zeit für einen drehmomentunterbrechungsfreien Antrieb des Fahrzeugs sorgt.

25. Verfahren nach Anspruch 24, **dadurch gekennzeichnet, dass** eine Schalteinrichtung vorgesehen ist, mit welcher mindestens zwei als Motor betriebene elektrische Maschinen (22, 24) elektrisch parallel zueinander oder elektrisch in Reihe zueinander verschaltet werden.

26. Verfahren nach Anspruch 24 oder 25, **dadurch gekennzeichnet, dass** zwei elektrische Maschinen (22, 24) als Motor betrieben werden, dass zum Verändern des Lastzustands mindestens einer elektrischen Maschine (22), insbesondere der zweiten und der dritten elektrischen Maschine (22, 24), zwei elektrische Maschinen (22, 24) von einer elektrischen Reihenschaltung in eine elektrische Parallelschaltung oder von einer elektrischen Parallelschaltung in eine elektrische Reihenschaltung umschaltbar sind.

27. Verfahren nach einem der Ansprüche 24 bis 26, **dadurch gekennzeichnet, dass** die Wicklungen einer als Motor betriebenen elektrischen Maschine (22, 24, 110) intern elektrisch parallel, in Reihe, im Stern oder im Dreieck verschaltet werden.

28. Verfahren nach einem der Ansprüche 24 bis 27, **dadurch gekennzeichnet, dass** zur Beschaltungsänderung einer als Motor betriebenen elektrischen Maschine (22) eine zu dieser elektrischen Maschine (22) synchron gekoppelte weitere elektrische Maschine (24) zunächst derart angesteuert wird, dass mit der weiteren elektrischen Maschine (24) einen drehmomentunterbrechungsfreien Betrieb bei einem lastlosen Zustand der umzuschaltenden elektrischen Maschine (22) möglich ist und dass die Beschaltung der umzuschaltenden elektrischen Maschine (22) in dem Lastzustand der weiteren elektrischen Maschine (24) geändert wird.

29. Verfahren nach einem der Ansprüche 24 bis 28, **dadurch gekennzeichnet, dass** mindestens zwei als Motor betriebene elektrische Maschinen (22, 24) derart ansteuerbar sind, dass eventuell vorliegende Drehmomentungleichförmigkeiten einer einzelnen elektrischen Maschine (22; 24) von einer anderen elektrischen Maschine (24; 22) auf Grund der synchronen Kopplung zumindest weitgehend ausgeglichen wird, insbesondere in einem Betriebszustand, in welchem die mindestens zwei als Motor betriebene elektrische Maschinen (22, 24) mit der ersten und/oder zweiten mechanischen Ausgangsschnittstelle (16, 18) gekoppelt sind.

30. Verfahren nach einem der Ansprüche 24 bis 29, **dadurch gekennzeichnet, dass** eine elektrische Maschine (22, 24, 110) zumindest größtenteils derart betrieben wird, dass ein vorgebbarer Feldschwächebereich nicht überschritten wird.

## Claims

1. Drive system of an agricultural or industrial utility vehicle, preferably of a tractor, having a drive assembly (12) which generates a mechanical torque and has an internal combustion engine, having a first and a second electrical machine (20, 22), having a first mechanical output interface (16) which serves to drive at least one vehicle axle, and having a second mechanical output interface (18) in the form of a power take-off shaft, wherein an electrical machine (20, 22) has a rotor (32, 34) which is connected in a rotationally fixed manner to a shaft (38, 40), wherein the drive assembly (12) is in torque flow with the shaft (38) of the first electrical machine (20), wherein a work device which can be coupled to the vehicle can be mechanically driven by way of the second output interface (18), wherein the shaft (40) of the second electrical machine (22) can be connected in a reversible manner to the first mechanical output interface (16), and wherein a third electrical machine (24) is provided, it being possible to connect the shaft (42) of the said third electrical machine in a reversible manner to the first mechanical output interface (16), **characterized in that** the shafts (40, 42) of the second and third electrical machines (22, 24) can be synchronously coupled to one another with the aid of a gearbox shifting point (48) which is additionally provided for this purpose and is directly connected to the shaft (40) of the second electrical machine (22), as a result of which one of the second and third electrical machines (22, 24) can be moved to a load-free state and the other electrical machine (22, 24) ensures driving of the vehicle without torque interruption during this time.

2. Drive system according to Claim 1, **characterized in that** the shafts (40, 42) of the second and the third electrical machine (22, 24) are always synchronously coupled, for example by means of a gear wheel (54) which can be connected in a rotationally fixed manner to the first output interface (16) in particular.

3. Drive system according to Claim 1 or 2, **characterized in that** at least one of the electrical machines (20; 110) can be operated as a generator, and **in that** at least one of the two other electrical machines (20, 22, 24, 110) can be driven using the electrical energy which is generated by an electrical machine (20; 110).

4. Drive system according to one of the preceding claims, **characterized in that** an intermediate circuit (144, 146, 148A to 148D, 150A to 150D, 170A, 170B) is provided, an electrical machine (20, 110) which is operated as a generator feeding the electric current which is generated by the said electrical machine into the said intermediate circuit, and it being possible for electric current to be supplied to at least one electrical machine (20, 22, 24, 110) by way of the said intermediate circuit, and **in that** the intermediate circuit (144, 146, 148A to 148D, 150A to 150D, 170A, 170B) preferably has a DC circuit.

5. Drive system according to one of the preceding claims, **characterized in that** at least two electrical machines (20, 22, 24, 110) are of substantially identical construction and/or have a substantially comparable power characteristic.

6. Drive system according to one of the preceding claims, **characterized in that** a switching device (146) is provided, it being possible to interconnect at least two electrical machines (22, 24), which are operated as motors, electrically in parallel with one another or electrically in series with one another by way of the said switching device.

7. Drive system according to one of the preceding claims, wherein two electrical machines (22, 24, 110) which are operated as motors are provided, **characterized in that**, in order to change the load state of at least one electrical machine (22, 24, 110), in particular of the second and of the third electrical machine (22, 24), two electrical machines (22, 24) can be switched over from an electrical series connection to an electrical parallel connection or from an electrical parallel connection to an electrical series connection.

8. Drive system according to one of the preceding claims, **characterized in that** the windings of an electrical machine (22, 24, 110) which is operated as a motor can be internally connected electrically in parallel, in series, in star or in delta.

9. Drive system according to one of the preceding claims, **characterized in that**, in order to change the circuitry of an electrical machine (22, 24, 110) which is operated as a motor, a further electrical machine (24) which is synchronously coupled to the said electrical machine (22) is initially actuated in such a way that operation without torque interruption in a load-free state of the electrical machine (22) which is to be switched over is possible by way of the further electrical machine (24), and **in that** the circuitry of the electrical machine (22) which is to be switched over can be changed in the loaded state of the further electrical machine (24).

10. Drive system according to one of the preceding claims, **characterized in that** at least two electrical machines (22, 24) which are operated as motors can be actuated in such a way that any torque irregularities which may be present in an individual electrical machine (22; 24) can be at least largely compensated for by another electrical machine (24; 22) owing to the synchronous coupling, in particular in an operating state in which the at least two electrical machines (22, 24) which are operated as motors are coupled to the first and/or the second mechanical output interface (16, 18).

11. Drive system according to one of the preceding claims, **characterized in that** an electrical machine (22, 24, 110) can be operated at least for the most part in such a way that a prespecifiable field-weakening range is not exceeded.

12. Drive system according to one of the preceding claims, **characterized in that** at least two of the three electrical machines (20, 22, 24, 110) are arranged or accommodated in a common housing arrangement (152), and/or **in that** at least two of the electrical machines (20, 22, 24, 110) are arranged physically adjacent to one another.

13. Drive system according to one of the preceding claims, **characterized in that** at least two of the electrical machines (20, 22, 24, 110) are physically arranged in such a way that the shafts (38, 40, 42, 116) of the said electrical machines are oriented substantially parallel to one another.

14. Drive system according to one of the preceding claims, **characterized in that** a fourth electrical machine (110) is provided, it being possible to couple the said fourth electrical machine to the first and/or to the second mechanical output interface (16, 18).

15. Drive system according to one of the preceding claims, in particular according to Claim 14, **characterized in that**, in order to sum the torque which is generated by the drive assembly (12) and the torque which is generated by an electrical machine (22, 24, 110), a summing gear (58) with three mechanical interfaces (60, 62, 64 and, respectively, 88) is provided, **in that** the first interface (60) of the summing gear (58) is coupled to a shaft (14) which is driven by the drive assembly (12), **in that** the second interface (62) of the summing gear (58) can be coupled to the shaft (116; 40) of an electrical machine (110; 22), and **in that** the third interface (64; 88) of the summing gear (58) can be coupled in a reversible manner to the first mechanical output interface (16) and/or to the second mechanical output interface (18) of the drive system (10).

16. Drive system according to Claim 15, **characterized in that** the summing gear (58) has a planetary gear mechanism (58), **in that** the shaft (14), which is driven by the drive assembly (12), is preferably connected in a rotationally fixed manner to the internal gear (66) of the planetary gear mechanism (58), **in that** the planetary carrier (74) of the planetary gear mechanism (58) can be coupled in a reversible manner to the first output interface (16), and **in that** the sun gear (70) of the planetary gear mechanism (58) can be coupled in a reversible manner to the second, third or fourth electrical machine (22, 24, 110).

17. Drive system according to Claim 16, **characterized in that** the shaft (116) of the fourth electrical machine (110) is connected in a rotational manner to the sun gear (70) of the planetary gear mechanism (58).

18. Drive system according to Claim 15 or 16, **characterized in that** the planetary carrier (74) of the planetary gear mechanism (58) and/or a shaft (14), which is driven by the drive assembly (12), can be coupled in a reversible manner to the second output interface (18), preferably by means of a multidisc clutch (122) or a claw clutch (86).

19. Drive system according to one of the preceding claims, **characterized by** a first operating state in which the first electrical machine (20) is operated as a generator and the second and the third electrical machine (22, 24) are operated as motors and are connected to the first mechanical output interface (16).

20. Drive system according to one of the preceding claims, in particular according to Claim 14, **characterized by** a second operating state in which the fourth electrical machine (110) which is operated as a generator can be driven by a portion of the mechanical torque which is generated by the drive assembly (12), in which the second and the third electrical machine (22, 24) are operated as motors, and wherein the mechanical torque which is generated by the second and third electrical machines (22, 24) can be transmitted, together with a further portion of the mechanical torque which is generated by the drive assembly (12), to the first mechanical output interface (16).

21. Drive system according to one of the preceding claims, in particular according to Claim 14, **characterized by** a third operating state in which the first electrical machine (20) is operated as a generator, in which the fourth electrical machine (110) is operated as a motor, and wherein the mechanical torque which is generated by the fourth electrical machine (110) can be transmitted, such that it can be summed with the mechanical torque which is generated by the drive assembly (12), to the first mechanical output interface (16).

22. Drive system according to one of the preceding claims, in particular according to Claim 14, **characterized in that** the fourth electrical machine (110) can be operated as a motor, and **in that** the torque which is generated by the fourth electrical machine (110) and - if an appropriate clutch (82, 120) is engaged - at least a portion of the mechanical torque which is generated by the drive assembly (12) can be transmitted to the second mechanical output interface (18).

23. Agricultural or industrial utility vehicle, in particular a tractor, **characterized by** a drive system (10) according to one of Claims 1 to 22.

24. Method for operating a drive system according to one of Claims 1 to 22, wherein the drive system (10) has a drive assembly (12) which generates a mechanical torque and has an internal combustion engine, a first and a second electrical machine (20, 22), a first mechanical output interface (16) which serves to drive at least one vehicle axle, and a second mechanical output interface (18) in the form of a power take-off shaft, wherein an electrical machine (20, 22) has a rotor (32, 34) which is connected in a rotationally fixed manner to a shaft (38, 40), wherein the drive assembly (12) is in torque flow with the shaft (38) of the first electrical machine (20), wherein a work device which can be coupled to the vehicle can be mechanically driven by way of the second output interface (18), wherein the shaft (40) of the second electrical machine (22) can be connected in a reversible manner to the first mechanical output interface (16), and wherein a third electrical machine (24) is provided, it being possible to connect the shaft (42) of the said third electrical machine in a reversible manner to the first mechanical output interface (16), **characterized in that** the shafts (40, 42) of the second and third electrical machines (22, 24) can be synchronously coupled to one another with the aid of a gearbox shifting point (48) which is additionally provided for this purpose and is directly connected to the shaft (40) of the second electrical machine (22), as a result of which one of the second and third electrical machines (22, 24) can be moved to a load-free state and the other electrical machine (22, 24) ensures driving of the vehicle without torque interruption during this time.

25. Method according to Claim 24, **characterized in that** a switching device is provided, it being possible to interconnect at least two electrical machines (22, 24), which are operated as motors, electrically in parallel with one another or electrically in series with one another by way of the said switching device.

26. Method according to Claim 24 or 25, **characterized in that** two electrical machines (22, 24) are operated as motors, **in that**, in order to change the load state of at least one electrical machine (22), in particular of the second and of the third electrical machine (22, 24), two electrical machines (22, 24) can be switched over from an electrical series connection to an electrical parallel connection or from an electrical parallel connection to an electrical series connection.

27. Method according to one of Claims 24 to 26, **characterized in that** the windings of an electrical machine (22, 24, 110) which is operated as a motor can be internally connected electrically in parallel, in series, in star or in delta.

28. Method according to one of Claims 24 to 27, **characterized in that**, in order to change the circuitry of an electrical machine (22) which is operated as a motor, a further electrical machine (24) which is synchronously coupled to the said electrical machine (22) is initially actuated in such a way that operation without torque interruption in a load-free state of the electrical machine (22) which is to be switched over is possible by way of the further electrical machine (24), and **in that** the circuitry of the electrical machine (22) which is to be switched over is changed in the loaded state of the further electrical machine (24).

29. Method according to one of Claims 24 to 28, **characterized in that** at least two electrical machines (22, 24) which are operated as motors can be actuated in such a way that any torque irregularities which may be present in an individual electrical machine (22; 24) can be at least largely compensated for by another electrical machine (24; 22) owing to the synchronous coupling, in particular in an operating state in which the at least two electrical machines (22, 24) which are operated as motors are coupled to the first and/or the second mechanical output interface (16, 18).

30. Method according to one of Claims 24 to 29, **characterized in that** an electrical machine (22, 24, 110) can be operated at least for the most part in such a way that a prespecifiable field-weakening range is not exceeded.

## Revendications

1. Système d'entraînement d'un véhicule utilitaire agricole ou industriel, de préférence d'un tracteur, comprenant un bloc d'entraînement (12) produisant un couple de rotation mécanique, qui comporte un moteur à combustion interne, une première et une deuxième machine électrique (20, 22), une première interface de sortie mécanique (16), servant à entraîner au moins un axe du véhicule, et une deuxième interface de sortie mécanique (18) en tant qu'arbre de prise de force, dans lequel une machine électrique (20, 22) comporte un rotor (32, 34) qui est relié de manière solidaire en rotation à un arbre (38, 40), dans lequel le bloc d'entraînement (12) est relié par flux de couple de rotation à l'arbre (38) de la première machine électrique (20), dans lequel un engin de travail pouvant être accouplé au véhicule peut être entraîné mécaniquement au moyen de la deuxième interface de sortie (18), dans lequel l'arbre (40) de la deuxième machine électrique (22) peut être relié de manière réversible à la première interface de sortie mécanique (16), et dans lequel il est prévu une troisième machine électrique (24) dont l'arbre (42) peut être relié de manière réversible à la première interface de sortie mécanique (16), **caractérisé en ce que** les arbres (40, 42) des deuxième et troisième machines électriques (22, 24) peuvent être accouplés l'un à l'autre de manière synchrone à l'aide d'un point de changement de vitesse (48) supplémentaire prévu à cet effet, directement relié à l'arbre (40) de la deuxième machine électrique (22), d'où il résulte que l'une des deuxième et troisième machines électriques (22, 24) peut être amenée dans un état d'absence de charge et l'autre machine électrique (22, 24) assure pendant ce temps un entraînement du véhicule sans interruption du couple de rotation.

2. Système d'entraînement selon la revendication 1, **caractérisé en ce que** les arbres (40, 42) des deuxième et troisième machines électriques (22, 24) sont toujours accouplés de manière synchrone, par exemple par l'intermédiaire d'une roue dentée (54) qui peut être amenée en liaison solidaire en rotation avec la première interface de sortie (16).

3. Système d'entraînement selon la revendication 1 ou 2, **caractérisé en ce qu'**au moins l'une des machines électriques (20 ; 110) peut être mise en fonctionnement en tant que générateur et **en ce que** l'une des deux autres machines électriques (20, 22, 24, 110) peut être entraînée par l'énergie électrique produite par une machine électrique (20 ; 110).

4. Système d'entraînement selon l'une quelconque des revendications précédentes, **caractérisé en ce qu'**il est prévu un circuit électrique intermédiaire (144, 146, 148A à 148D, 150A à 150D, 170A, 170B) dans lequel une machine électrique (20, 110) mise en fonctionnement en tant que générateur délivre un courant électrique généré par celle-ci et au moyen de laquelle au moins une machine électrique (20, 22, 24, 110) peut être alimentée en courant électrique et **en ce que** le circuit électrique intermédiaire (144, 146, 148A à 148D, 150A à 150D, 170A, 170B) comporte de préférence un circuit à courant continu.

5. Système d'entraînement selon l'une quelconque des revendications précédentes, **caractérisé en ce qu'**au moins deux machines électriques (20, 22, 24, 110) sont réalisées de manière à présenter des structures sensiblement identiques et/ou comportent une caractéristique de puissance sensiblement comparable.

6. Système d'entraînement selon l'une quelconque des revendications précédentes, **caractérisé en ce qu'**il est prévu un dispositif de commutation (146) au moyen duquel au moins deux machines électriques (22, 24) mises en fonctionnement en tant que moteur peuvent être connectées électriquement l'une à l'autre en parallèle ou en série.

7. Système d'entraînement selon l'une quelconque des revendications précédentes, dans lequel il est prévu deux machines électriques (22, 24, 110) mises en fonctionnement en tant que moteurs, **caractérisé en ce que**, pour modifier l'état de charge d'au moins une machine électrique (22, 24, 110), notamment de la deuxième et de la troisième machine électrique (22, 24), deux machines électriques (22, 24) peuvent être amenées à basculer d'une connexion électrique en série à une connexion électrique en parallèle ou d'une connexion électrique en parallèle à une connexion électrique en série.

8. Système d'entraînement selon l'une quelconque des revendications précédentes, **caractérisé en ce que** les enroulements d'une machine électrique (22, 24, 110) entraînées en tant que moteur peuvent être interconnectés électriquement en parallèle, en série, en étoile ou en triangle.

9. Système d'entraînement selon l'une quelconque des revendications précédentes, **caractérisé en ce que**, pour la modification de connexion d'une machine électrique (22, 24, 110) mise en fonctionnement en tant que moteur, une autre machine électrique (24) accouplée de manière synchrone à ladite machine électrique (22) est tout d'abord commandée de manière à ce qu'un fonctionnement sans interruption du couple de rotation soit possible au moyen de l'autre machine électrique (24) dans un état d'absence de charge de la machine électrique (22) devant effectuer un basculement et à ce que la connexion de la machine électrique (22) devant effectuer un basculement puisse être modifiée dans l'état de charge de l'autre machine électrique (24).

10. Système d'entraînement selon l'une quelconque des revendications précédentes, **caractérisé en ce qu'**au moins deux machines électriques (22, 24) mises en fonctionnement en tant que moteurs peuvent être commandées de manière à ce que les irrégularités du couple de rotation éventuellement présentes d'une machine électrique (22 ; 24) individuelle puissent être régularisées de manière au moins sensiblement suffisante par une autre machine électrique (24 ; 22) sur la base de l'accouplement synchrone, notamment dans un état de fonctionnement dans lequel les au moins deux machines électriques (22, 24) mises en fonctionnement en tant que moteurs sont accouplées à la première et/ou à la deuxième interface de sortie mécanique (16, 18).

11. Système d'entraînement selon l'une quelconque des revendications précédentes, **caractérisé en ce qu'**une machine électrique (22, 24, 110) peut être au moins en grande partie mise en fonctionnement de manière à ne pas dépasser un domaine d'affaiblissement de champ pouvant être prédéfini.

12. Système d'entraînement selon l'une quelconque des revendications précédentes, **caractérisé en ce qu'**au moins deux des trois machines électriques (20, 22, 24, 110) sont agencées ou logées dans un ensemble boîtier (152) commun et/ou **en ce qu'**au moins deux des machines électriques (20, 22, 24, 110) sont agencées de manière spatialement adjacentes l'une à l'autre.

13. Système d'entraînement selon l'une quelconque des revendications précédentes, **caractérisé en ce qu'**au moins deux des machines électriques (20, 22, 24, 110) sont agencées spatialement de manière à ce que leurs arbres (38, 40, 42, 116) soient orientés sensiblement parallèlement les uns aux autres.

14. Système d'entraînement selon l'une quelconque des revendications précédentes, **caractérisé en ce qu'**il est prévu une quatrième machine électrique (110) qui peut être accouplée à la première et/ou à la deuxième interface de sortie mécanique (16, 18).

15. Système d'entraînement selon l'une quelconque des revendications précédentes, notamment selon la revendication 14, **caractérisé en ce que**, pour additionner le couple de rotation produit par le bloc d'entraînement (12) et le couple de rotation produit par une machine électrique (22, 24, 110), il est prévu un mécanisme additionneur (58) comportant trois interfaces mécaniques (60, 62, 64 ou 88), **en ce que** la première interface (60) du mécanisme additionneur (58) est accouplée à un arbre (14) entraîné par le bloc d'entraînement (12), **en ce que** la deuxième interface (62) du mécanisme additionneur (58) peut être accouplée à l'arbre (116 ; 40) d'une machine électrique (110 ; 22) et **en ce que** la troisième interface (64 ; 88) du mécanisme additionneur (58) peut être accouplée de manière réversible à la première interface de sortie mécanique (16) et/ou à la deuxième interface de sortie mécanique (18) du système d'entraînement (10).

16. Système d'entraînement selon la revendication 15, **caractérisé en ce que** le mécanisme additionneur (58) comporte un mécanisme planétaire (58), **en ce que** l'arbre (14) entraîné par le bloc d'entraînement (12) est de préférence relié de manière solidaire en rotation à la couronne dentée (66) du mécanisme planétaire (58), **en ce que** le porte-satellites (74) du mécanisme planétaire (58) peut être accouplé de manière réversible à la première interface de sortie (16) et **en ce que** la roue solaire (70) du mécanisme planétaire (58) peut être accouplée de manière réversible à la deuxième, à la troisième ou à la quatrième machine électrique (22, 24, 110).

17. Système d'entraînement selon la revendication 16, **caractérisé en ce que** l'arbre (116) de la quatrième machine électrique (110) est en liaison de rotation avec la roue solaire (70) du mécanisme planétaire (58).

18. Système d'entraînement selon la revendication 15 ou 16, **caractérisé en ce que** le porte-satellites (74) du mécanisme planétaire (58) et/ou un arbre (14) entraîné par le bloc d'entraînement (12) peut être accouplé de manière réversible à la deuxième interface de sortie (18), de préférence au moyen d'un embrayage à disques multiples (122) ou d'un embrayage à griffes (86).

19. Système d'entraînement selon l'une quelconque des revendications précédentes, **caractérisé par** un premier état de fonctionnement dans lequel la première machine électrique (20) est mise en fonctionnement en tant que générateur et les deuxième et troisième machines électriques (22, 24) sont mises en fonctionnement en tant que moteurs et sont reliées à la première interface de sortie mécanique (16).

20. Système d'entraînement selon l'une quelconque des revendications précédentes, notamment selon la revendication 14, **caractérisé par** un deuxième état de fonctionnement dans lequel la quatrième machine électrique (110) mise en fonctionnement en tant que générateur peut être entraînée par une partie du couple de rotation mécanique produit par le bloc d'entraînement (12), deuxième état dans lequel les deuxième et troisième machines électriques (22, 24) sont mises en fonctionnement en tant que moteurs, et dans lequel le couple de rotation mécanique produit par les deuxième et troisième machines électriques (22, 24) peut être transmis au moyen d'une autre partie du couple de rotation mécanique produit par le bloc d'entraînement (12) à la première interface de sortie mécanique (16).

21. Système d'entraînement selon l'une quelconque des revendications précédentes, notamment selon la revendication 14, **caractérisé par** un troisième état de fonctionnement dans lequel la première machine électrique (20) est mise en fonctionnement en tant que générateur, quatrième état dans lequel la quatrième machine électrique (110) est mise en fonctionnement en tant que moteur, et dans lequel le couple de rotation mécanique produit par la quatrième machine électrique (110) peut être additionné au couple de rotation mécanique produit par le bloc d'entraînement (12) et peut être transmis à la première interface de sortie mécanique (16).

22. Système d'entraînement selon l'une quelconque des revendications précédentes, notamment selon la revendication 14, **caractérisé en ce que** la quatrième machine électrique (110) peut être mise en fonctionnement en tant que moteur et **en ce que** le couple de rotation mécanique produit par la quatrième machine électrique (110) et, dans le cas où un embrayage correspondant (82, 120) est embrayé, au moins une partie du couple de rotation mécanique produit par le bloc d'entraînement (12) peuvent être transmis à la deuxième interface de sortie mécanique (18).

23. Véhicule utilitaire agricole ou industriel, notamment, tracteur, **caractérisé par** un système d'entraînement (10) selon l'une quelconque des revendications 1 à 22.

24. Procédé de mise en fonctionnement d'un système d'entraînement selon l'une quelconque des revendications 1 à 22, dans lequel le système d'entraînement (10) comporte un bloc d'entraînement (12) produisant un couple de rotation mécanique, qui comporte un moteur à combustion interne, une première et une deuxième machine électrique (20, 22), une première interface de sortie mécanique (16), servant à entraîner au moins un axe de véhicule, et une deuxième interface de sortie mécanique (18) en tant qu'arbre de prise de force, dans lequel une machine électrique (20, 22) comporte un rotor (32, 34) qui est relié de manière solidaire en rotation à un arbre (38, 40), dans lequel le bloc d'entraînement (12) est relié par un flux de couple de rotation à l'arbre (38) de la première machine électrique (20), dans lequel un engin de travail accouplé au véhicule peut être entraîné mécaniquement par la deuxième interface de sortie (18), dans lequel l'arbre (40) de la deuxième machine électrique (22) peut être relié de manière réversible à la première interface de sortie mécanique (16), et dans lequel il est prévu une troisième machine électrique (24) dont l'arbre (42) peut être relié de manière réversible à la première interface de sortie mécanique (16), **caractérisé en ce que** les arbres (40, 42) des deuxième et troisième machines électriques (22, 24) peuvent être accouplés l'un à l'autre de manière synchrone à l'aide d'un point de changement de vitesse (48) supplémentaire prévu à cet effet, directement relié à l'arbre (40) de la deuxième machine électrique (22), d'où il résulte que l'une des deuxième et troisième machines électriques (22, 24) peut être amenée dans un état d'absence de charge et l'autre machine électrique (22, 24) assure pendant ce temps un entraînement du véhicule sans interruption du couple de rotation.

25. Procédé selon la revendication 24, **caractérisé en ce qu'**il est prévu un dispositif de commutation au moyen duquel au moins deux machines électriques (22, 24) mises en fonctionnement en que moteurs sont électriquement connectées l'une à l'autre en parallèle ou en série.

26. Procédé selon la revendication 24 ou 25, **caractérisé en ce que** deux machines électriques (22, 24) sont mises en fonctionnement en tant que moteurs, **en ce que**, pour modifier l'état de charge d'au moins une machine électrique (22), notamment de la deuxième et de la troisième machine électrique (22, 24), deux machines électriques (22, 24) peuvent être amenées à basculer d'une connexion électrique en série à une connexion électrique en parallèle ou d'une connexion électrique en parallèle à une connexion électrique en série.

27. Procédé selon l'une quelconque des revendications 24 à 26, **caractérisé en ce que** les enroulements d'une machine électrique (22, 24, 110) mis en fonctionnement en tant que moteur sont interconnectés électriquement en parallèle, en série, en étoile ou en triangle.

28. Procédé selon l'une quelconque des revendications 24 à 27, **caractérisé en ce que**, pour la modification de connexion d'une machine électrique (22) mise en fonctionnement en tant que moteur, une autre machine électrique (24) accouplée de manière synchrone à ladite machine électrique (22) est tout d'abord commandée de manière à ce qu'un fonctionnement sans interruption du couple de rotation soit possible au moyen de l'autre machine électrique (24) dans un état d'absence de charge de la machine électrique (22) devant effectuer un basculement et à ce que la connexion de la machine électrique (22) devant effectuer un basculement puisse être modifiée dans l'état de charge de l'autre machine électrique (24).

29. Procédé selon l'une quelconque des revendications 24 à 28, **caractérisé en ce qu'**au moins deux machines électriques (22, 24) mises en fonctionnement en tant que moteurs peuvent être commandées de manière à ce que les irrégularités du couple de rotation éventuellement présentes d'une machine électrique (22 ; 24) individuelle soient régularisées de manière au moins sensiblement suffisante par une autre machine électrique (24 ; 22) sur la base de l'accouplement synchrone, notamment dans un état de fonctionnement dans lequel les au moins deux machines électriques (22, 24) mises en fonctionnement en tant que moteurs sont accouplées à la première et/ou à la deuxième interface de sortie mécanique (16, 18).

30. Procédé selon l'une quelconque des revendications 24 à 29, **caractérisé en ce qu'**une machine électrique (22, 24, 110) est au moins en grande partie mise en fonctionnement de manière à ne pas dépasser un domaine d'affaiblissement de champ pouvant être prédéfini.
